# EUROPEAN PATENT SPECIFICATION

(11) **EP 2 688 969 B1**
(45) Date of publication and mention of the grant of the patent: **19.07.2017**
(21) Application number: 12761484.0
(22) Date of filing: 22.03.2012
(51) Int. Cl.: C09J 133/04, C09J 7/00, C09J 7/02, C09J 11/00, C08J 5/18, C08L 53/00, C08K 5/523

(54) **FLAME RETARDING ADHESIVES**
FLAMMHEMMENDE KLEBSTOFFE
ADHÉSIFS IGNIFUGES

(30) Priority: 24.03.2011 US 201161466988 P
(43) Date of publication of application: 29.01.2014
(73) Proprietor: 3M Innovative Properties Company, St. Paul, MN 55133-3427 (US)
(72) Inventor: TRAN, Thu-Van T., Saint Paul, Minnesota 55133-3427 (US); ALOSHYNA ep LESUFFLEUR, Marie, Saint Paul, Minnesota 55133-3427 (US); ROSS, Richard B., Saint Paul, Minnesota 55133-3427 (US); PYUN, Eumi, Saint Paul, Minnesota 55133-3427 (US); PLEPYS, Anthony R., Saint Paul, Minnesota 55133-3427 (US); HARRISON, Peter J., Saint Paul, Minnesota 55133-3427 (US); CLAPPER, Jason D., Saint Paul, Minnesota 55133-3427 (US); JING, Naiyong, Saint Paul, Minnesota 55133-3427 (US); BHARTI, Vivek, Saint Paul, Minnesota 55133-3427 (US); SHARMA, Neeraj, Saint Paul, Minnesota 55133-3427 (US)
(74) Representative: Herzog, Fiesser & Partner Patentanwälte PartG mbB
(86) International application number: PCT/US2012/030038
(87) International publication number: WO 2012/129362

(56) References cited:
- WO-A1-2007/029783
- WO-A1-2009/111433
- WO-A1-2009/146227
- WO-A1-2009/146227
- JP-A- 2003 147 312
- JP-A- 2004 107 447
- US-A- 6 022 914
- US-A1- 2004 126 542
- US-A1- 2006 084 755
- US-A1- 2007 009 582
- US-A1- 2008 011 419
- US-A1- 2010 113 636

## Description

### Field of the Disclosure

The present disclosure relates generally to the field of adhesives specifically to the field of pressure sensitive adhesives that have flame retardant properties.

### Background

Adhesives have been used for a variety of marking, holding, protecting, sealing and masking purposes. Adhesive tapes generally comprise a backing, or substrate, and an adhesive. One type of adhesive, a pressure sensitive adhesive, is particularly useful for many applications.

Pressure sensitive adhesives are well known to one of ordinary skill in the art to possess certain properties at room temperature including the following: (1) aggressive and permanent tack, (2) adherence with no more than finger pressure, (3) sufficient ability to hold onto an adherend, and (4) sufficient cohesive strength to be removed cleanly from the adherend. Materials that have been found to function well as pressure sensitive adhesives are polymers designed and formulated to exhibit the requisite viscoelastic properties resulting in a desired balance of tack, peel adhesion, and shear strength. The most commonly used polymers for preparation of pressure sensitive adhesives are natural rubber, synthetic rubbers (e.g., styrene/butadiene copolymers (SBR) and styrene/isoprene/styrene (SIS) block copolymers), various (meth)acrylate (e.g., acrylate and methacrylate) copolymers and silicones. Each of these classes of materials has advantages and disadvantages.

One class of pressure sensitive adhesive polymeric materials are (meth)acrylate block copolymers. These polymers contain acrylate and/or methacrylate polymeric segments arranged in blocks. The preparation of these polymers and pressure sensitive adhesive articles made from them are described in the US Patent Nos. 6,806,320 (Everaerts et al.), 6,734,256 (Everaerts et al.), 7,084,209 (Everaerts et al.), and 7,255,920 (Everaerts et al.), and PCT Publication Nos. WO 2009/146227 (Joseph et al.) and WO 2009/111433 (Tse et al.).

Flame retardant additives have been added to materials to make the materials more flame retardant. Among the materials to which flame retardant additives have been added are: thermoplastic resin compositions in US Patent No. 5,952,408 (Lee at al.); resins in US Patent No. 4,526,917 (Axelrod), textile and wire coatings in Japanese Patent No. JP 2006045418 (Hamada et al.); and high-impact polycarbonate molding compounds in US Patent No. 5,061,745 (Wittmann et al.). Additionally, flame retardant adhesives and pressure sensitive adhesives have been prepared by the addition of flame retardant additives to adhesive matrices. Examples of these adhesives include: US Patent Publication No. 2007/0059521 (Nakamura) which relates to the use of metal hydrate compounds in acrylic polymers; US Patent No. 5,851,663 (Parson et al.) which relates to non-halogen intumescent flame retardant pressure sensitive adhesives and tapes; US Patent Publication 2009/0291291 (Epple) that relates to a flame retardant pressure sensitive adhesive containing a metal oxide, a metal hydrate, a halogenated material, and a liquid phosphorous bromide; US Patent No. 6,114,426 (Burack et al.) which relates to flame retardant adhesives containing an acrylic polymer, dibromostyrene, and vinyl phosphoric acid; and US Patent Publication No. 2010/0009181 (Umemoto et al.) which relates to a halogen-free pressure sensitive adhesive tape containing a modified acrylic resin and a tape backing prepared from a non-halogenated resin.

### Summary

Disclosed herein are adhesives that have flame retarding properties, especially pressure sensitive adhesives, and methods of making adhesives that have flame retarding properties. The adhesives comprise a (meth)acrylate-based block copolymer, and at least 10% by weight of a halogen-free flame retarding agent. The adhesives are flame retardant pressure sensitive adhesives. The adhesives may contain at least one halogen-free additive consisting of a tackifying resin, an anti-oxidant, an inorganic filler, a UV stabilizer, a plasticizer, a softening agent, or combination thereof.

Also disclosed are methods of making adhesives with flame retarding properties. These methods comprise providing a (meth)acrylate-based block copolymer, providing a halogen-free flame retarding agent, and blending the (meth)acrylate-based block copolymer, and the halogen-free flame retarding agent to form a pressure sensitive adhesive. The halogen-free flame retarding agent comprises at least 10% by weight of the adhesive. The blending of the (meth)acrylate-based block copolymer, and the halogen-free flame retarding agent may be done by a solvent-borne or a solventless process.

### Detailed Description

The use of adhesives, especially pressure sensitive adhesives, is increasing. Among the areas in which the use of adhesives is increasing are the medical, electronic and optical industries, as well as consumer goods and public transportation. The requirements of these industries require adhesives with specialized features. For example, adhesives, such as pressure sensitive adhesives, are needed that provide additional features beyond the traditional properties of tack, peel adhesion and shear strength. New classes of materials are desirable to meet the increasingly demanding performance requirements for adhesives. Among the performance requirements are optical clarity and flame retardancy. Optical clarity is often desired because often the adhesive layer is a component of an optical article or device, and flame retardancy is desired to prevent or reduce the spread of fire to protect life and property.

A variety of techniques can be used to prepare flame retardant adhesives. Often flame retardant additives are added to the adhesive to give the adhesive flame retardant properties. Many of the commonly used flame retardant additives are halogen-containing, such as, for example, polychlorinated biphenyl and polybrominated diphenyl ethers. However, halogen-containing materials are increasing considered to be environmentally unfavorable and their use in adhesives is increasingly discouraged. Also, the use of flame retardant additives can adversely affect the optical properties of the adhesive.

Disclosed herein are adhesives, such as pressure sensitive adhesives, that have a variety of desirable properties besides the normal desirable properties of adhesives (peel strength, shear holding power, and tackiness). The adhesives are flame retardant, and in some embodiments also are optically clear. This flame retardancy is achieved without the use the halogen-containing flame retardant additives. The combination of flame retardancy and optical clarity is achieved through the choice of elastomeric polymer ((meth)acrylate-based block copolymers) and the use of a halogen-free flame retarding agent.

Unless otherwise indicated, all numbers expressing feature sizes, amounts, and physical properties used in the specification and claims are to be understood as being modified in all instances by the term "about." Accordingly, unless indicated to the contrary, the numerical parameters set forth in the foregoing specification and attached claims are approximations that can vary depending upon the desired properties sought to be obtained by those skilled in the art utilizing the teachings disclosed herein. The recitation of numerical ranges by endpoints includes all numbers subsumed within that range (e.g. 1 to 5 includes 1, 1.5, 2, 2.75, 3, 3.80, 4, and 5) and any range within that range.

As used in this specification and the appended claims, the singular forms "a", "an", and "the" encompass embodiments having plural referents, unless the content clearly dictates otherwise. For example, reference to "a layer" encompasses embodiments having one, two or more layers. As used in this specification and the appended claims, the term "or" is generally employed in its sense including "and/or" unless the content clearly dictates otherwise.

The term "adhesive" as used herein refers to polymeric compositions useful to adhere together two adherends. Examples of adhesives are pressure sensitive adhesives.

Pressure sensitive adhesive compositions are well known to those of ordinary skill in the art to possess properties including the following: (1) aggressive and permanent tack, (2) adherence with no more than finger pressure, (3) sufficient ability to hold onto an adherend, and (4) sufficient cohesive strength to be cleanly removable from the adherend. Materials that have been found to function well as pressure sensitive adhesives are polymers designed and formulated to exhibit the requisite viscoelastic properties resulting in a desired balance of tack, peel adhesion, and shear holding power. Obtaining the proper balance of properties is not a simple process.

The terms "halogen-containing" or "halogen-free" refer to materials, particularly adhesive additives. Additives that are halogen-free are essentially free of halogen atoms such as fluorine, chlorine, bromine and iodine atoms. Additives that are halogen-containing have at least some hydrogen atoms replaced by halogen atoms.

Unless otherwise indicated, "optically transparent" refers to an article, film or adhesive that has a high light transmittance over at least a portion of the visible light spectrum (about 400 to about 700 nm). The term "transparent film" refers to a film having a thickness and when the film is disposed on a substrate, an image (disposed on or adjacent to the substrate) is visible through the thickness of the transparent film. In many embodiments, a transparent film allows the image to be seen through the thickness of the film without substantial loss of image clarity. In some embodiments, the transparent film has a matte or glossy finish.

Unless otherwise indicated, "optically clear" refers to an adhesive or article that has a high light transmittance over at least a portion of the visible light spectrum (about 400 to about 700 nm), and that exhibits low haze.

The term "(meth)acrylate" refers to monomeric acrylic or methacrylic esters of alcohols. Acrylate and methacrylate monomers or oligomers are referred to collectively herein as "(meth)acrylates". The term "(meth)acrylate-based" when used to describe polymers such as block copolymers, refers to polymers that are prepared from (meth)acrylate monomers. These polymers may contain only (meth)acrylate monomers or they may contain monomers that are co-reactive with (meth)acrylates.

As used herein, the term "polymer" refers to a polymeric material that is a homopolymer or a copolymer. As used herein, the term "homopolymer" refers to a polymeric material that is the reaction product of one monomer. As used herein, the term "copolymer" refers to a polymeric material that is the reaction product of at least two different monomers. As used herein, the term "block copolymer" refers to a copolymer formed by covalently bonding at least two different polymeric blocks to each other. The two different polymeric blocks are referred to as the A block and the B block. Typically, the A blocks provide discrete reinforcing "nanodomains" within an overwhelming continuous phase formed from less rigid B blocks by phase separation between the A and B blocks to cohesively reinforce the elastomer. The term "phase separation" as used herein refers to the presence of distinct reinforcing A block domains (i.e., nanodomains) in a matrix comprised of the softer B block phase. In order to function optically clear, the phase separated nanodomains should be smaller than the wavelength of visible light (about 400 to about 700 nm).

The terms "tackifying resin", "tackifying agent" and "tackifier" are used interchangeably herein.

The terms "plasticizing resin", "plasticizing agent" and "plasticizer" are used interchangeably herein.

The term "alkyl" refers to a monovalent group that is a radical of an alkane, which is a saturated hydrocarbon. The alkyl can be linear, branched, cyclic, or combinations thereof and typically has 1 to 20 carbon atoms. In some embodiments, the alkyl group contains 1 to 18, 1 to 12, 1 to 10, 1 to 8, 1 to 6, or 1 to 4 carbon atoms. Examples of alkyl groups include, but are not limited to, methyl, ethyl, n-propyl, isopropyl, n-butyl, isobutyl, tert-butyl, n-pentyl, n-hexyl, cyclohexyl, n-heptyl, n-octyl, ethylhexyl, n-lauryl, isodecyl, tridecyl, tetradecyl, hexadecyl, and octadecyl.

The term "aryl" refers to a monovalent group that is aromatic and carbocyclic. The aryl can have one to five rings that are connected to or fused to the aromatic ring. The other ring structures can be aromatic, non-aromatic, or combinations thereof. Examples of aryl groups include, but are not limited to, phenyl, biphenyl, terphenyl, anthryl, naphthyl, acenaphthyl, anthraquinonyl, phenanthryl, anthracenyl, pyrenyl, perylenyl, and fluorenyl.

The term "alkylene" refers to a divalent group that is a radical of an alkane. The alkylene can be straight-chained, branched, cyclic, or combinations thereof. The alkylene often has 1 to 20 carbon atoms. In some embodiments, the alkylene contains 1 to 18, 1 to 12, 1 to 10, 1 to 8, 1 to 6, or 1 to 4 carbon atoms. The radical centers of the alkylene can be on the same carbon atom (i.e., an alkylidene) or on different carbon atoms.

The term "heteroalkyl" refers to a monovalent group that includes at least two alkylene groups connected by a thio, oxy, or -NR- where R is alkyl. The heteroalkyl can be linear, branched, cyclic, substituted with alkyl groups, or combinations thereof. Some heteroalkyls are poloxyyalkylenes where the heteroatom is oxygen such as for example, CH₃CH₂(OCH₂CH₂)ₙOCH₂CH₂-.

The term "arylene" refers to a divalent group that is carbocyclic and aromatic. The group has one to five rings that are connected, fused, or combinations thereof. The other rings can be aromatic, non-aromatic, or combinations thereof. In some embodiments, the arylene group has up to 5 rings, up to 4 rings, up to 3 rings, up to 2 rings, or one aromatic ring. For example, the arylene group can be phenylene.

The term "heteroarylene" refers to a divalent group that is carbocyclic and aromatic and contains heteroatoms such as sulfur, oxygen, nitrogen or halogens such as fluorine, chlorine, bromine or iodine.

The term "aralkyl" refers to a monovalent group of formula -R^{a}-Ar^{a} where R^{a} is an alkylene and Ar^{a} is an aryl (i.e., an alkylene is bonded to an aryl).

The terms "free radically polymerizable" and "ethylenically unsaturated" are used interchangeably and refer to a reactive group which contains a carbon-carbon double bond which is able to be polymerized via a free radical polymerization mechanism.

Disclosed herein are adhesives. The adhesives typically comprise a layer, often a continuous layer. The adhesive layers may be a stand alone layer, such as for example a transfer tape, or the adhesive may be coated onto a backing or substrate to form an adhesive article.

The adhesives of this disclosure comprise a (meth)acrylate-based block copolymer and at least 10% by weight of a halogen-free flame retarding agent. The adhesives are flame retardant pressure sensitive adhesives. In some embodiments the adhesives are also optically transparent or optically clear.

The pressure sensitive adhesive layer contains a (meth)acrylate-based block copolymer that includes the reaction product of at least two A block polymeric units and at least one B block polymeric unit (i.e., at least two A block polymeric units are covalently bonded to at least one B block polymeric unit). Each A block, which has a Tg of at least 50°C, is the reaction product of a first monomer composition that contains an alkyl methacrylate, an aralkyl methacrylate, an aryl methacrylate, or a combination thereof. The B block, which has a Tg no greater than 20°C, is the reaction product of a second monomer composition that contains an alkyl(meth)acrylate, a heteroalkyl(meth)acrylate, a vinyl ester, or a combination thereof. The block copolymer contains 20 to 50 weight percent A block and 50 to 80 weight percent B block based on the weight of the block copolymer.

Methods of preparing block copolymers using living anionic polymerization methods are further described, for example, in U.S. Patent Nos. 6,734,256 (Everaerts et al), 7,084,209 (Everaerts et al), 6,806,320 (Everaerts et al), and 7,255,920 (Everaerts et al.). This polymerization method is further described, for example, in U.S. Patent Nos. 6,630,554 (Hamada et al.) and 6,984,114 (Kato et al.) as well as in Japanese Patent Application Kokai Publication Nos. Hei 11 -302617 (Uchiumi et al.) and 11 -323072 (Uchiumi et al.). Suitable block copolymers can be purchased from Kuraray Co., LTD. (Tokyo, Japan) under the trade designations LA POLYMER or KURARITY. Some of these block copolymers such as LA2140E, LA2250, LA2330, and LA410L are triblock copolymers with poly(methyl methacrylate) endblocks and a poly(n-butyl acrylate) midblock. The block copolymers described in US Patent No. 7,255,920 (Everaerts et al.) are particularly suitable, as these block copolymers are optically clear.

The block copolymer in the pressure sensitive adhesive layer can be a triblock copolymer (i.e., (A-B-A) structure) or a star block copolymer (i.e., (A-B)ₙ-structure where n is an integer of at least 3). Star-block copolymers, which have a central point from which various branches extend, are also referred to as radial copolymers.

Each A block polymeric unit as well as each B block polymeric unit can be a homopolymer or copolymer. The A block is usually an end block (i.e., the A block forms the ends of the copolymeric material), and the B block is usually a midblock (i.e., the B block forms a middle portion of the copolymeric material). The A block is typically a hard block that is a thermoplastic material, and the B block is typically a soft block that is an elastomeric material.

As used herein, the term "thermoplastic" refers to a polymeric material that flows when heated and that returns to its original state when cooled back to room temperature. As used herein, the term "elastomeric" refers to a polymeric material that can be stretched to at least twice its original length and then retracted to approximately its original length upon release.

The A block tends to be more rigid than the B block (i.e., the A block has a higher glass transition temperature than the B block). As used herein, the term "glass transition temperature" or "Tg''' refers to the temperature at which a polymeric material transitions from a glassy state (e.g., brittleness, stiffness, and rigidity) to a rubbery state (e.g., flexible and elastomeric). The Tg can be determined, for example, using techniques such as Differential Scanning Calorimetry (DSC) or Dynamic Mechanical Analysis (DMA). The A block has a Tg of at least 50°C whereas the B block has a Tg no greater than 20°C. The A block tends to provide the structural and cohesive strength for the (meth)acrylate block copolymer.

The block copolymer usually has an ordered multiphase morphology, at least at temperatures in the range of about 25°C to about 150°C. Because the A block has a solubility parameter sufficiently different than the B block, the A block phase and the B block phase are usually separated. The block copolymer can have distinct regions of reinforcing A block domain (e.g., nanodomains) in a matrix of the softer, elastomeric B blocks. That is, the block copolymer often has discrete, discontinuous A block phase in a substantially continuous B block phase.

Each A block is the reaction product of a first monomer mixture containing at least one methacrylate monomer of Formula I:

H₂C=C(CH₃)-(CO)-OR¹ Formula I

where R¹ is an alkyl (i.e., the monomer according to Formula I can be an alkyl methacrylate), an aralkyl (i.e., the monomer according to Formula I can be an aralkyl methacrylate), or an aryl group (i.e., the monomer according to Formula I can be an aryl methacrylate). Suitable alkyl groups often have 1 to 6 carbon atoms. When the alkyl group has more than 2 carbon atoms, the alkyl group can be branched or cyclic. Suitable aralkyl groups (i.e., an aralkyl is an alkyl group substituted with an aryl group) often have 7 to 12 carbon atoms while suitable aryl groups often have 6 to 12 carbon atoms.

Exemplary monomers according to Formula I include methyl methacrylate, ethyl methacrylate, isopropyl methacrylate, isobutyl methacrylate, tert-butyl methacrylate, cyclohexyl methacrylate, phenyl methacrylate, and benzyl methacrylate.

In addition to the monomers of Formula I, the A block can contain up to 10 weight percent of a polar monomer such as (meth)acrylic acid, a (meth)acrylamide, or a hydroxyalkyl(meth)acrylate. These polar monomers can be used, for example, to adjust the Tg (i.e., the Tg remains at least 50°C however) and the cohesive strength of the A block. Additionally, these polar monomers can function as reactive sites for chemical or ionic crosslinking, if desired.

As used herein, the term "(meth)acrylic acid" refers to both acrylic acid and methacrylic acid. As used herein, the term "(meth)acrylamide" refers to both an acrylamide and a methacrylamide. The (meth)acrylamide can be a N-alkyl(meth)acrylamide or a N,N-dialkyl(meth)acrylamide where the alkyl substituent has 1 to 10, 1 to 6, or 1 to 4 carbon atoms. Exemplary (meth)acrylamides include acrylamide, methacrylamide, N-methyl acrylamide, N-methyl methacrylamide, N,N-dimethyl acrylamide, N,N-dimethyl methacrylamide, and N-octyl acrylamide.

As used herein, the term "hydroxyalkyl(meth)acrylate" refers to a hydroxyalkyl acrylate or a hydroxyalkyl methacrylate where the hydroxy substituted alkyl group has 1 to 10, 1 to 6, or 1 to 4 carbon atoms. Exemplary hydroxyalkyl(meth)acrylates include 2-hydroxyethyl acrylate, 2-hydroxyethyl methacrylate, 3-hydroxypropyl acrylate, and 3-hydroxypropyl methacrylate.

The A blocks in the block copolymer can be the same or different. In some block copolymers, each A block is a poly(methyl methacrylate). In more specific examples, the block copolymer can be a triblock or a starblock copolymer where each endblock is a poly(methyl methacrylate).

The weight average molecular weight (Mw) of each A block is usually at least about 5,000 g/mole. In some block copolymers, the A block has a weight average molecular weight of at least about 8,000 g/mole or at least about 10,000 g/mole. The weight average molecular weight of the A block is usually less than about 30,000 g/mole or less than about 20,000 g/mole. The weight average molecular weight of the A block can be, for example, about 5,000 to about 30,000 g/mole, about 10,000 to about 30,000 g/mole, about 5,000 to about 20,000 g/mole, or about 10,000 to about 20,000 g/mole.

Each A block has a Tg of at least 50°C. In some embodiments, the A block has a Tg of at least 60°C, at least 80°C, at least 100°C, or at least 120°C. The Tg is often no greater than 200°C, no greater than 190°C, or no greater than 180°C. For example, the Tg of the A block can be 50°C to 200°C, 60°C to 200°C, 80°C to 200°C, 100°C to 200°C, 80°C to 180°C, or 100°C to 180°C.

The B block is the reaction product of a second monomer composition that contains an alkyl(meth)acrylate, a heteroalkyl(meth)acrylate, a vinyl ester, or a combination thereof. As used herein, the term "alkyl(meth)acrylate" refers to an alkyl acrylate or an alkyl methacrylate. As used herein, the term "heteroalkyl(meth)acrylate" refers to a heteroalkyl acrylate or heteroalkyl methacrylate with the heteroalkyl having at least two carbon atoms and at least one caternary heteroatom (e.g., sulfur or oxygen).

Exemplary vinyl esters include, but are not limited to, vinyl acetate, vinyl 2-ethylhexanoate, and vinyl neodecanoate.

Exemplary alkyl(meth)acrylates and heteroalkyl(meth)acrylates are often of Formula II

H₂C=CR²-(CO)-OR³ Formula II

where R² is hydrogen or methyl; and R³ is a C₃₋₁₈ alkyl or a C₂₋₁₈ heteroalkyl. When R² is hydrogen (i.e., the monomer according to Formula II is an acrylate), the R³ group can be linear, branched, cyclic, or a combination thereof. When R² is methyl (i.e., the monomer according to Formula II is a methacrylate) and R³ has 3 or 4 carbon atoms, the R³ group can be linear. When R² is methyl and R³ has at least 5 carbon atoms, the R³ group can be linear, branched, cyclic, or a combination thereof.

Suitable monomers according to Formula II include, but are not limited to, n-butyl acrylate, decyl acrylate, 2-ethoxy ethyl acrylate, 2-ethoxy ethyl methacrylate, isoamyl acrylate, n-hexyl acrylate, n-hexyl methacrylate, isobutyl acrylate, isodecyl acrylate, isodecyl methacrylate, isononyl acrylate, 2-ethylhexyl acrylate, 2-ethylhexyl methacrylate, isooctyl acrylate, isooctyl methacrylate, isotridecyl acrylate, lauryl acrylate, lauryl methacrylate, 2-methoxy ethyl acrylate, 2-methylbutyl acrylate, 4-methyl-2-pentyl acrylate, n-octyl acrylate, n-propyl acrylate, n-octyl methacrylate, hexadecyl acrylate, tetradecyl acrylate, and octadecyl acrylate.

(Meth)acrylate blocks prepared from monomers according to Formula II that are commercially unavailable or that cannot be polymerized directly, can be provided through an esterification or trans-esterification reaction. For example, a (meth)acrylate that is commercially available can be hydrolyzed and then esterified with an alcohol to provide the (meth)acrylate of interest. This process may leave some residual acid in the B block. Alternatively, a higher alkyl(meth)acrylate ester can be derived from a lower alkyl(meth)acrylate ester by direct transesterification of the lower alkyl(meth)acrylate with a higher alkyl alcohol.

The B block can include up to about 30 weight percent polar monomers as long as the Tg of the B block is no greater than 20°C. Polar monomers include, but are not limited to, (meth)acrylic acid; (meth)acrylamides such as N-alkyl(meth)acrylamides and N,N-dialkyl(meth)acrylamides; hydroxy alkyl(meth)acrylates; and N-vinyl lactams such as N-vinyl pyrrolidone and N-vinyl caprolactam. The polar monomers can be included in the B block to adjust the Tg or the cohesive strength of the B block. Additionally, the polar monomers can function as reactive sites for chemical or ionic crosslinking, if desired.

The B block typically has a Tg that is no greater than 20°C. In some embodiments, the B block has a Tg that is no greater than 10°C, no greater than 0°C, no greater than-5°C, or no greater than -10°C. The Tg often is no less than -80°C, no less than -70°C, or no less than -50°C. For example, the Tg of the B block can be -70°C to 20°C, -60°C to 20°C, -70°C to 10°C, -60°C to 10°C, -70°C to 0°C, -60°C to 0°C, -70°C to -10°C, or 60°C to -10°C.

The B block tends to be elastomeric. As used herein, the term "elastomeric" refers to a polymeric material that can be stretched to at least twice its original length and then retracted to approximately its original length upon release. In some pressure sensitive adhesive compositions, additional elastomeric material is added. This added elastomeric material should not adversely affect the optical clarity or the adhesive properties (e.g., the storage modulus) of the pressure sensitive adhesive composition. The chemistry of the B block can affect the tackiness of the block copolymer (e.g., block copolymers with a lower rubbery plateau storage modulus, as determined using Dynamic Mechanical Analysis, tend to be tackier).

In some embodiments, the monomer according to Formula II is an alkyl(meth)acrylate with the alkyl group having 4 to 18, 4 to 10, 4 to 6, or 4 carbon atoms. In some examples, the monomer is an acrylate. Acrylate monomers tend to be less rigid than their methacrylate counterparts. For example, the B block can be a poly(n-butyl acrylate).

The weight average molecular weight of the B block is usually at least about 30,000 g/mole. In some block copolymers, the B block has a weight average molecular weight of at least about 40,000 g/mole or at least about 50,000 g/mole. The weight average molecular weight is generally no greater than about 200,000 g/mole. The B block usually has a weight average molecular weight no greater than 150,000 g/mole, no greater than about 100,000 g/mole, or no greater than about 80,000 g/mole. In some block copolymers, the B block has a weight average molecular weight of about 30,000 g/mole to about 200,000 g/mole, about 30,000 g/mole to about 100,000 g/mole, about 30,000 g/mole to about 80,000 g/mole, about 40,000 g/mole to about 200,000 g/mole, about 40,000 g/mole to about 100,000 g/mole, or about 40,000 g/mole to about 80,000 g/mole.

The B block is a polymeric material that as a homopolymer has an average entanglement molecular weight no greater than about 60,000 g/mole. As used herein, the term "average entanglement molecular weight" is an indicator of the average distance between entanglements in a random coil of the polymeric material and refers to the average molecular weight between entanglements. If the weight average molecular weight of the B block is greater than the average entanglement molecular weight, the B block polymer will be entangled. In some B blocks, the average entanglement molecular weight is no greater than about 50,000 g/mole or no greater than about 40,000 g/mole. The entanglement molecular weight can be altered by the choice of monomers used to prepare the B block. For example, poly(n-butyl acrylate) tends to have a lower entanglement molecular weight than poly(iso-octyl acrylate).

The block copolymers usually contain 20 to 50 weight percent A block and 50 to 80 weight percent B block based on the weight of the block copolymer. For example, the copolymer can contain 20 to 40 weight percent A block and 60 to 80 weight percent B block, 25 to 40 weight percent A block and 60 to 75 weight percent B block, 30 to 40 weight percent A block and 60 to 70 weight percent B block, 20 to 35 weight percent A block and 65 to 80 weight percent B block, 25 to 35 weight percent A block and 65 to 75 weight percent B block, or 30 to 35 weight percent A block and 65 to 70 weight percent B block. Higher amounts of the A block tend to increase the cohesive strength of the copolymer. If the amount of the A block is too high, the tackiness of the block copolymer may be unacceptably low. Further, if the amount of the A block is too high, the morphology of the block copolymer may be inverted from the desirable arrangement where the B block forms the continuous phase to where the A block forms the continuous phase and the block copolymer has characteristics of a thermoplastic material rather than of a pressure sensitive adhesive material.

The block copolymers have a saturated polymeric backbone. As such, these polymeric materials tend to be resistant to weather-induced (e.g., ultraviolet radiation-induced and oxidation-induced) degradation. It has also been found that these polymers are themselves somewhat flame retardant even without the presence of flame retardant additives. For example, it has been observed that compared to (meth)acrylate polymers of similar molecular weight but which are not block copolymers, the (meth)acrylate block copolymers have a low specific heat release that provides flame retardant properties.

Any technique that produces well-controlled block and block copolymer structures can be used to prepare the block copolymers. As used herein, the term "well-controlled" refers to block or block copolymer structures that have at least one of the following characteristics: controlled molecular weight, low polydispersity, well-defined blocks, or blocks having high purity.

Some blocks and block copolymers have a well-controlled molecular weight. That is, molecular weights close to the theoretical molecular weights are obtained when the A blocks and the B block are synthesized. As used herein, the term "theoretical molecular weight" refers to the calculated molecular weight based on the molar charge of monomers and initiators used to form each block. For living polymers, the term "degree of polymerization" or "DP" refers to the number of monomer repeat units in a typical polymeric backbone. The DP can be calculated from the number of moles of monomer divided by the number of moles of initiator. The theoretical molecular weight equals DP multiplied by the formula weight of the monomer unit used to prepare a block homopolymer or equals DP multiplied by the average formula weight of the monomer units used to prepare a block copolymer. The weight average molecular weight (Mw) is often about 0.8 to about 1.2 times the theoretical molecular weight or about 0.9 to about 1.1 times the theoretical molecular weight. As such, blocks and block copolymers having a selected molecular weight can be prepared.

The blocks and block copolymers usually have low polydispersity. As used herein, the term "polydispersity" is a measure of the molecular weight distribution and refers to the weight average molecular weight (Mw) divided by the number average molecular weight (Mn) of the polymer. Materials that are all of the same molecular weight have a polydispersity of 1.0 while materials that have more than one molecular weight have a polydispersity greater than 1.0. The polydispersity can be determined, for example, using gel permeation chromatography. Some blocks and block copolymer have a polydispersity of 2.0 or less, 1.5 or less, or 1.2 or less.

In some block copolymers, the boundaries between the nanodomains containing the A blocks and the continuous phase containing the B blocks are well defined (i.e., the boundaries are essentially free of tapered structures--structures derived from monomers used for both the A and B blocks). Tapered structures can increase mixing of the A block phase and the B block phase leading to decreased overall cohesive strength of the pressure sensitive adhesive.

Some A blocks and B blocks have high purity. For example, the A blocks can be essentially free of segments derived from monomers used during the preparation of the B blocks. Similarly, B blocks can be essentially free of segments derived from monomers used during the preparation of the A blocks.

Generally, the polymerization method does not use iniferters. Iniferters leave residues that can be problematic especially in photo-induced polymerization reactions. For example, the presence of thiocarbamate, a commonly used iniferter, can cause the resulting block copolymer to be more susceptible to weather-induced degradation. It is believed that the weather-induced degradation may result from the relatively weak carbon-sulfur link in the thiocarbamate residue. The presence of thiocarbamates can be detected, for example, using elemental analysis or mass spectroscopy.

Techniques that tend to produce well-controlled block and block copolymer structures can include living free radical polymerization techniques, living anionic polymerization techniques, and group transfer polymerization techniques. Specific examples of living free radical polymerization reactions include atom transfer polymerization reactions and reversible addition-fragmentation chain transfer polymerization reactions.

As used herein, the term "living polymerization" refers to polymerization techniques, processes, or reactions in which propagating species do not undergo either termination or transfer. If additional monomer is added after 100 percent conversion, additional polymerization can occur. The molecular weight of the living polymer increases linearly as a function of conversion because the number of propagating species does not change. Such polymerizations can often be used to prepare block copolymers.

Living polymerization techniques typically lead to more stereoregular block structures than blocks prepared using non-living or pseudo-living polymerization techniques (e.g., polymerization reactions that use iniferters). Stereoregularity, as evidenced by highly syndiotactic structures or isotactic structures, tends to result in well-controlled block structures and tends to influence the glass transition temperature of the block. For example, syndiotactic poly(methyl methacrylate) (PMMA) synthesized using living polymerization techniques can have a glass transition temperature that is about 20°C to about 25°C higher than a comparable PMMA synthesized using conventional (i.e., non-living) polymerization techniques. Stereoregularity can be detected, for example, using nuclear magnetic resonance spectroscopy. Structures with greater than about 75 percent stereoregularity can often be obtained using living polymerization techniques.

When living polymerization techniques are used to form a block, the monomers are contacted with an initiator in the presence of in inert diluent. The inert diluent can facilitate heat transfer and mixing of the initiator with the monomers. Although any suitable inert diluent can be used, saturated hydrocarbons, aromatic hydrocarbons, ethers, esters, ketones, or a combination thereof are often selected. Exemplary diluents include, but are not limited to, saturated aliphatic and cycloaliphatic hydrocarbons such as hexane, octane, cyclohexane, petroleum ether, aromatic hydrocarbons such as toluene; and aliphatic and cyclic ethers such as dimethyl ether, diethyl ether, tetrahydrofuran, esters such as ethyl acetate and butyl acetate; and ketones such as acetone, methyl ethyl ketone. When the block copolymers are prepared using living anionic polymerization techniques, the simplified structure A-M can represent the living A block where M is an initiator fragment selected from a Group I metal such as Li, Na, or K. The A block is the polymerization product of a first monomer composition that includes methacrylate monomers according to Formula I. A second monomer composition that includes the monomers used to form the B block (e.g., the second monomer composition can include monomers according to Formula II) can be added to A-M resulting in the formation of the living diblock structure A-B-M. The addition of another charge of the first monomer composition, which includes monomers according to Formula I, and the subsequent elimination of the living anion site can result in the formation of triblock structure A-B-A. Alternatively, living diblock A-B-M structures can be coupled using difunctional or multifunctional coupling agents to form the triblock structure A-B-A copolymers or (A-B)ₙ star block copolymers.

Any initiator known in the art for living anionic polymerization reactions can be used. Typical initiators include alkali metal hydrocarbons such as organomonolithium compounds (e.g., ethyl lithium, n-propyl lithium, iso-propyl lithium, n-butyl lithium, sec-butyl lithium, tert-octyl lithium, n-decyl lithium, phenyl lithium, 2-naphthyl lithium, 4-butylphenyl lithium, 4-phenylbutyl lithium, cyclohexyl lithium). Such a monofunctional initiator can be useful in the preparation of a living A block or a living B block. For living anionic polymerization of (meth)acrylates, the reactivity of the anion is tempered by the addition of complexing ligands selected from materials such as lithium chloride, crown ethers, or lithioethoxylates.

Suitable difunctional initiators for living anionic polymerization reactions include, but are not limited to, 1,1,4,4-tetraphenyl-1,4-dilithiobutane; 1,1,4,4-tetraphenyl-1,4-dilithioisobutane; and naphthalene lithium, naphthalene sodium, naphthalene potassium, and homologues thereof. Other suitable difunctional initiators include dilithium compounds such as those prepared by an addition reaction of an alkyl lithium with a divinyl compound. For example, an alkyl lithium can be reacted with 1,3-bis(1-phenylethenyl)benzene or m-diisopropenylbenzene.

Other initiators or combinations of initiators can be used when the block copolymers are prepared using living free radical polymerization techniques. For a description of living free radical polymerization reactions and suitable initiators for these reactions, see PCT Patent Publication Nos. WO 97/18247 (Matyjaszewski et al.) and WO 98/01478 (Le et al.).

For living anionic polymerization reactions, it is usually advisable to add the initiator drop wise to the monomers until the persistence of the characteristic color associated with the anion of the initiator is observed. Then, the calculated amount of the initiator can be added to produce a polymer of the desired molecular weight. The preliminary drop wise addition destroys contaminants that react with initiator and allows better control of the polymerization reaction.

The polymerization temperature used depends on the monomers being polymerized and on the type of polymerization technique used. Generally, the reaction can be carried out at a temperature of about -100°C to about 100°C. For living anionic polymerization reactions, the temperature is often about -80°C to about 20°C. For living free radical polymerization reactions, the temperature is often about 20°C to about 150°C. Living free radical polymerization reactions tend to be less sensitive to temperature variations than living anionic polymerization reactions.

In general, the polymerization reaction is carried out under controlled conditions so as to exclude substances that can destroy the initiator or living anion. Typically, the polymerization reaction is carried out in an inert atmosphere such as nitrogen, argon, helium, or combinations thereof. When the reaction is a living anionic polymerization, anhydrous conditions may be necessary.

Typically the (meth)acrylate block copolymers are hot melt processable. This means that they are able to undergo hot melt processing (such as for example passing through an extruder or similar apparatus) without appreciable polymer degradation. The (meth)acrylate block copolymers can melt flow at temperatures above about 150°C. The melt flow temperature of the block copolymers can be adjusted by adjusting the level of compatibility (i.e., miscibility) between the A block and the B block of the block copolymer. For example, the composition of the A block can be selected to include a first monomeric unit that provides strength and a desired glass transition temperature and a second monomeric unit that alters the melt flow temperature of the block copolymer. Suitable second monomeric units include, for example, cycloalkyl methacrylates such as cyclohexyl methacrylate. Any useful relative amounts of the first and second monomers can be used.

The melt flow can also be adjusted by varying the weight of A blocks and the B blocks. For example, the melt flow temperature can be increased by increasing the weights of the blocks and can be decreased by decreasing the weight of the blocks.

The A blocks and the B blocks interact with each other differently at different temperatures, providing useful temperature-controlled properties. At low temperatures (e.g., at temperatures below the glass transition temperature of the A blocks but above the glass transition temperature of the B block), the different blocks tend to phase separate. The A block nanodomains provide rigidity and strength within the lower modulus continuous B block phase.

The (meth)acrylate-based copolymer can be optically transparent or optically clear as defined above. The optical clarity can be dependent on the size of the A block nanodomains. For optical clarity, it is desirable for the nanodomains to be smaller than the wavelength of visible light (about 400 to about 700 nm). The nanodomains often have an average size less than about 150 nm or less than about 100 nanometers. The size of the nanodomains can be altered, for example, by changing the amount of the A block or by changing the monomeric composition used to form the A block in the block copolymer. Unless the refractive indexes of both phases are well matched, larger domain sizes tend to cause light scattering.

The adhesives of this disclosure also include a halogen-free flame retarding agent. A wide range of halogen-free flame retarding agents may be used. Organophosphorous compounds are particularly suitable. Examples of organophosphorous compunds that are suitable include, phosphate esters, aromatic condensed phosphate esters, polyphosphate esters, and phosphinic acids. Specific examples of phosphate esters include triphenyl phosphate, tricresyl phosphate, cresyldiphenyl phosphate, 2-ethylhexyldiphenyl phosphate, tri-n-butyl phosphate, trixylenyl phosphate, resorcinol(bis)diphenyl phosphate and bisphenol A bis(diphenyl phosphate). Specific examples of polyphosphate ester include ammonium polyphosphate, ammonium melamine-modified polyphosphate and coated ammonium polyphosphate. As used herein, coated ammonium polyphosphate refers to ammonium polyphosphate whose water resistance is improved by coating with a resin or encapsulation. A specific example of a phosphinic acid is diisooctyl phosphinic acid. Particularly suitable halogen-free flame retardant additives include, resorcinol(bis)diphenyl phosphate, bisphenol A bis(diphenyl phosphate), and the triaryl phosphate ester commercially available as SANTICIZER S-154 from Monsanto Company, St. Louis, MO.

Typically the halogen-free flame retardant additive is added in an amount sufficient to aid in the flame retardancy of the adhesive. In some embodiments, the halogen-free flame retardant additive is added in an amount of at least 10% by weight based upon the total weight of (meth)acrylate-based block copolymer and tackifying resin (if present). In some embodiments, at least 15% by weight, 20% by weight, 25% by weight, 30% by weight 33% by weight, 35 % by weight, or even 40%, 50% or 60% by weight based upon the total weight of (meth)acrylate-based block copolymer and tackifying resin (if present). Because many of the halogen-free flame retardant additives typically have a plasticizing effect on the adhesive, it may be desirable to limit the amount added to prevent a lessening of the cohesive strength of the adhesive. Generally, the halogen-free flame retardant additive is added in an amount less than 70% by weight based upon the total weight of (meth)acrylate-based block copolymer and tackifying resin (if present).

The adhesives of this disclosure may also include at least one tackifying resin. A wide range of tackifying resins are suitable. Suitable tackifying resins include, for example, terpene phenolics, rosins, rosin esters, esters of hydrogenated rosins, synthetic hydrocarbon resins and combinations thereof. Examples of suitable tackifying resins include, but are not limited to, those commercially available under the trade designation FORAL from either Eastman Chemicals (Kingsport, TN) or Hercules, Inc. (Wilmington, DE). For example, FORAL 85, FORAL 85E, and FORAL 85LB (LB refers to low bromine) are glycerol esters of rosin acids. FORAL 105 and FORAL 105E are pentaerythritol esters of rosin acids. FORAL AX and FORAL AX- E are rosin acids. Other suitable tackifying resins include, for example, various glycerol esters of rosin acids that are commercially available under the trade designation SUPER ESTER from Arakawa Chemical, USA (Chicago, IL), under the trade designations SYLVALITE or SYLVATAC from Arizona Chemical (Panama City, FL), and under the trade designation PERMALYN from Eastman Chemicals (Kingsport, TN). Examples include, but are not limited to, SUPER ESTER W-IOO, SUPER ESTER A-75, SUPER ESTER W-IOO, SUPER ESTER KE-100, SUPER ESTER KE-300, SYLVALITE RE88, SYLVALITE RE100, SYLVATAC RE4265, SYLVATAC RE429, and PERMALYN 5095-C. The tackifying resins SUPER ESTER KE-100 and SUPER ESTER KE-300 are considered to be optically clear. Particularly suitable tackifying resins include, SUPER ESTER KE-100, SUPER ESTER A-75, and FORAL 85E.

The amount of tackifying resin, if present, varies dependent upon a number of variables including the desired use of the adhesive containing the tackifying resin, and the quantity and make up of the other components of the adhesive. Typically, the tackifying resin is present in amounts of 1-100 parts by weight based upon 100 parts by weight of (meth)acrylate-based block copolymer present. More typically the tackifying resin is present in amounts of 10-80 parts by weight, 20-60 parts by weight, or 25-50 parts by weight based upon 100 parts by weight of (meth)acrylate-based block copolymer present.

Other additives can be added to the pressure sensitive adhesive composition as long as these additives do not detrimentally affect the desired properties of the pressure sensitive adhesive composition. In some instances, the additives are selected to be compatible with the A or B block of the block copolymer. An additive is compatible in a phase (e.g., A block or B block) if it causes a shift in the glass transition temperature of that phase (assuming that the additive and the phase do not have the same Tg). Examples of these types of additives include tackifiers and plasticizers. Tackifiers, or tackifying agents, are discussed in greater detail above. Also, as discussed above, often the halogen-free flame retarding agent can also function as a plasticizer and therefore it may not be necessary or desirable to add an additional plasticizer.

Additional additives include anti-oxidants, fillers such as inorganic fillers, UV stabilizers, softening agents, or combinations of these additives.

Examples of suitable anti-oxidants include those based upon either a hindered phenol or a sulfur-containing organometallic salt. Among the hindered phenols are the ortho-substituted or the 2,5-di-substituted phenols where the substituent group (or groups) is a branched hydrocarbon radical having 2 to 30 carbon atoms, e.g., tertiary butyl or tertiary amyl. Other useful hindered phenols include para-substituted phenols where the substituent groups is an alkoxy group in which the alkyl group of the alkoxy is a methyl, ethyl, 3-substituted propionic ester, group. Among the sulfur-containing organometallic salts are the nickel derivatives of dibutyl dithiocarbamate. Representative examples of commercially available anti-oxidants include the hindered phenols available under the trade designations "IRGANOX 1076", available from Ciba, and "CYANOX LTDP", available from American Cyanamid Co.

The adhesive may also contain one or more fillers. Fillers typically do not change the Tg but can change the storage modulus. Examples of suitable fillers include both organic and inorganic fillers. Examples of organic fillers include, for example, wood flour or starch. More typically inorganic fillers are used. Examples of suitable inorganic fillers include calcium carbonate, clay, talc, silica, and limited amounts of carbon black. Various levels of fillers can be used to significantly reduce costs of the adhesive formulations of this disclosure. Lower levels may have little effect on the properties of the adhesive, whereas higher levels can appreciably increase stiffness, hardness, and resistance to deformation. Very fine particle size fillers, such as bentonite clay or a fumed silica sold under the trade designation "CAB-O-SIL" (Cabot Corporation) can be used to increase viscosity of solutions or to impart thixotropic solution properties. Also, if it is desirable that the adhesive be optically transparent or optically clear, the choice of filler, the level of filler and the particles size of the filler should be chosen so as to not detrimentally affect the optical properties of the adhesive.

Examples of suitable UV stabilizers include Ultraviolet absorbers (UVAs) and Hindered Amine Light Stabilizers (HALS). Benzotriazole UVAs such as the compounds TINUVIN P, 213, 234, 326, 327, 328, and 571 available from Ciba, Tarrytown, NY; hydroxylphenyl triazines such as TINUVIN 400 and 405 available from Ciba, Tarrytown, NY; HALS such as TINUVIN 123, 144, 622, 765, 770 available from Ciba, Tarrytown, NY; and the antioxidants IRGANOX 1010, 1135 and 1076 available from Ciba, Tarrytown, NY,are particularly useful. The material TINUVIN B75, a product containing UVA, HALS and antioxidant available from Ciba, Tarrytown, NY is also suitable.

A softening agent can be used, for example, to adjust the viscosity, to improve the processability (for example, making the adhesive composition suitable for extrusion), to lower the glass transition temperature resulting in enhanced adhesion at lower temperatures, or to adjust the balance between cohesive strength and adhesive strength. The softening agent is often selected to have low volatility, to be transparent in the visible region of the electromagnetic spectrum, and to be free or substantially free of color and/or odor. If an optional softening agent is included in the adhesive composition, it is typically present in an amount no greater than 20 weight percent, no greater than 15 weight percent, no greater than 10 weight percent, or no greater than 5 weight percent. Suitable softening agents for many adhesive compositions include, but are not limited to, a petroleum-based hydrocarbon such as an aromatic type (e.g., naphthalene type) or paraffin type; a liquid rubber or derivative thereof such liquid polybutylene resin, or hydrogenated liquid polyisoprene. Suitable polybutylene resins are commercially available under the trade designation INDOPOL from INEOS Oligomers (League City, TX) and under the trade designation PANALANE (e.g., PANALANE H300E) from LIPO Chemicals, Inc. (Paterson, NJ). In embodiments where softening agents are added, one softening agent or a combination of softening agents can be included in the adhesive composition.

Besides the properties which are normally associated with adhesives, such as pressure sensitive adhesives, such as peel strength, sheer holding power, and tackiness, the adhesives of this disclosure have additional desirable properties. Among these properties are flame retardancy, and in some embodiments desirable optical properties such as being optically transparent or optically clear.

A wide range of testing protocols have been developed to determine the flame retardancy of materials such as, for example, adhesives. The choice of protocol depends on a variety of factors, such as, for example, the intended use for the adhesive. Typically, adhesives are tested as adhesive articles, that is to say the adhesive is coated onto a backed or substrate for testing.

Among the suitable testing protocols is the Vertical Burn Test FAR 25.853a. This test is detailed in the Examples section, below. Many embodiments of flame retardant pressure sensitive adhesives of this disclosure pass this test when coated on a THV-500 or polyurethane backing. However, even embodiments of flame retardant pressure sensitive adhesives of this disclosure that do not pass this test, may be able to pass different testing protocols and therefore may be suitable flame retardant pressure sensitive adhesive for certain applications.

Some embodiments of the flame retardant adhesive are optically transparent or optically clear. As described above, "optically transparent" refers to an article, film or adhesive that has a high light transmittance over at least a portion of the visible light spectrum (about 400 to about 700 nm). Similarly, as described above, "optically clear" refers to an adhesive or article that has a high light transmittance over at least a portion of the visible light spectrum (about 400 to about 700 nm), and that exhibits low haze. Both the luminous transmission and haze can be determined using, for example, ASTM-D 1003-95. Additionally, spectrophotometers are commercially available for the testing of samples that generate luminous transmission and haze values directly. Examples of such instruments include, for example, a TCS Plus Spectrophotometer commercially available from BYK-Gardener, Inc.

The optical transparency or optical clarity can be controlled through a variety of techniques. Among these techniques are, for example, the selection of the (meth)acrylate-based block copolymer, the selection of the halogen-free flame retarding agent, the selection of any additional additives present in the adhesive such as tackifiers, plasticizers, anti-oxidants, fillers, and UV stabilizers. The particle size of any additives present can be especially important.

The optical transparency or clarity can be dependent upon the (meth)acrylate-based block copolymer. Especially important is the size of the A block nanodomains. The nanodomains often have an average size of less than about 150 nanometers or even less than about 100 nanometers. The size of the nanodomains can be controlled, for example, by the amount of A block or by the monomeric composition of the A block in the block copolymer. Unless the refractive indices of both phases (the A block phase and the B block phase) are well matched, larger domain sizes tend to cause light scattering.

Embodiments of the flame retardant pressure sensitive adhesive that are optically transparent typically have a % Transmission of at least 90% and a haze of less than 10%. Embodiments of the flame retardant pressure sensitive adhesive that are optically clear typically have a % Transmission of at least 95% and a haze of less than 5%. Additionally, some embodiments of the flame retardant optically clear pressure sensitive adhesive have a yellowing factor, b*, in the range of about 0.16 - 2.0.

It will be recognized that certain optical properties may be defined using the L*, a* and b* color scales. The L*, a*, and b* values are based upon the CIE (International Commission on Illumination) method, which determines the color scales using the transmission or reflection of the test material as a function of the wavelength of incident light, the spectral power of a chosen standard illuminant, and the color-matching functions of a CIE standard observer. The CIE procedures for determining L*, a*, and b* values are described in detail in ASTM E308 and ASTM E1164. ASTM E308 discusses the standard practice for computing the colors of objects using the CIE system, and ASTM E1164 discusses the standard practice for obtaining spectrophotmetric data for object-color evaluation. The L*, a*, and b* values cited herein are those determined using transmission within the visible spectrum, the CIE standard Illuminant C (representing daylight), and the color-matching functions of a 2 degree CIE standard observer.

The L*, a*, and b* color scales for a given object serve as coordinates to describe a certain color region in a three-dimensional color space. The a* and b* values describe the hue and saturation of the color. For example, a positive a* value is in the red region, while a negative a* value is located in the green region. A positive b* value is in the yellow region, and a negative b* is in the blue region. While the sign (positive or negative) of the a* and b* values determines the hue of an optical body, the absolute value determines the saturation of that particular hue.

An increasing absolute value corresponds to a higher saturation. The L* coordinate relates to the intensity or brightness of the optical body. Larger positive L* values corresponds to the white region, while smaller positive L* values approaching zero correspond to the black region. When the a* and b* color scales of the optical body approach zero, this corresponds to a neutral or gray color region. Therefore, to obtain a gray appearance, the a* and b* color scales should have an absolute value of about 5 or less. More preferably, the a* and b* color scales should have an absolute value of about 3 or less.

Although the L*, a*, and b* color scales can be measured accurately to several decimal places, an appreciable difference between color scales is generally one which can be perceived by the human eye. The human eye perceives differences in the color scales by noticing a change in the color or "shade" of the object. Typically, the human eye can only perceive differences between color scales when the absolute value of the difference is about 1 or more. Therefore, if a first material is considered to have a color scale that differs from the corresponding color scale of a second material, the absolute value of the difference between the two corresponding color scales should be about 1 or more, and more preferably, about 2 or more.

The adhesives of this disclosure may be prepared by a variety of techniques. The adhesives are prepared by blending a (meth)acrylate-based block copolymer and at least 10% by weight of a halogen-free flame retarding agent. The blend may be prepared either in solvent or as a solventless blend. As described above, additional components may be added to the adhesive blend such as one or more tackifying resin, anti-oxidant, filler, UV stabilizer, plasticizer or a combination thereof.

In some embodiments, the adhesive blend is prepared in solvent. The solvent may comprise a single solvent or a mixture of different solvents. Typically, if different solvents are used the solvents are compatible with each other. Solvent mixtures containing the (meth)acrylate-based block copolymer and at least 10% by weight of a halogen-free flame retarding agent may be prepared in a variety of different ways. The components may be each dissolved in solvent and mixed (mixing of solutions), one component may be dissolved in solvent and the other component added and dissolved (addition of a component to a solution) or the two components can be mixed together in the dry state and then dissolved by the addition of solvent. As stated above, solvent may mean a single solvent or may be a mixture of solvents.

To dissolve the (meth)acrylate based block copolymer, a solvent is selected that is a good solvent for both the A block and the B block of the block copolymer. Examples of suitable solvents include: ketones such as acetone and methyl ethyl ketone; ethers such as ethyl ether and tetrahydrofuran; esters such as ethyl acetate; alkanes such a hexane, heptane and petroleum ether; aromatics such as benzene and toluene; and combinations thereof. In some embodiments, toluene, ethyl acetate, tetrahydrofuran, and methyl ethyl ketone, are especially desirable solvents.

To dissolve the halogen-free flame retarding agent, any of the above listed solvents are suitable. In some embodiments, toluene, ethyl acetate, tetrahydrofuran, and methyl ethyl ketone, are especially desirable solvents. Similarly, any additional additives added to the adhesive blend (such as, for example, tackifying resins) can be added as a solution (already dissolved in solvent) or in dry form.

The adhesive solution blend, regardless of the sequence of additions used to form the solution blend, typically contains between about 30% to about 70% solids by weight, that is to say the dry weight of solid components (polymer, flame retardant, additives, etc) comprises 30-70% of the total weight of the solution.

To form adhesive articles, the solvent-borne adhesive blend is coated onto a substrate. The substrate may be, for example, a tape backing, the surface of an article, or a release liner. Examples of suitable tape backings include, for example, papers and polymeric films. Examples of papers include clay-coated paper and polyethylene-coated paper. Examples of polymeric films include films comprising one or more polymers such as cellulose acetate butyrate; cellulose acetate propionate; cellulose triacetate; poly(meth)acrylates such as polymethyl methacrylate; polyesters such as polyethylene terephthalate, and polyethylene naphthalate; copolymers or blends based on naphthalene dicarboxylic acids; polyether sulfones; polyurethanes; polycarbonates; polyvinyl chloride; syndiotactic polystyrene; cyclic olefin copolymers; and polyolefins including polyethylene and polypropylene such as cast and biaxially oriented polypropylene, and fluorothermoplastic polymers. The substrate may comprise single or multiple layers, such as polyethylene-coated polyethylene terephthalate. The substrate may be primed or treated to impart some desired property to one or more of its surfaces. Examples of such treatments include corona, flame, plasma and chemical treatments. Particularly suitable tape backings are prepared from polyethylene terephthalate (PET), from polyurethanes, or from fluorothermoplastic polymers. Particularly suitable backing materials are the fluorothermoplastic THV 500 commercially available from DYNEON, Oakdale, MN, and the polyether-type thermoplastic polyurethanes ESTANE 58244 and ESTANE 58277 commercially available from Lubrizol, Cleveland, OH.

In other embodiments, the substrate is the surface of an article. A wide variety of articles surfaces are suitable and may be rigid (such as, for example, a metal plate, a glass plate, etc) or flexible (such as, for example, fabrics, woven and non-woven webs, foams, carpets, metallic foils). The substrate may also be a release liner. Any suitable release liner can be used. Exemplary release liners include those prepared from paper (e.g., Kraft paper) or polymeric material (e.g., polyolefins such as polyethylene or polypropylene, ethylene vinyl acetate, polyurethanes, polyesters such as polyethylene terephthalate, and the like). At least some release liners are coated with a layer of a release agent such as a silicone-containing material or a fluorocarbon-containing material. Exemplary release liners include, but are not limited to, liners commercially available from CP Film (Martinsville, Va.) under the trade designation "T-30" and "T-10" that have a silicone release coating on polyethylene terephthalate film. The liner can have a microstructure on its surface that is imparted to the adhesive to form a microstructure on the surface of the adhesive layer. The liner can then be removed to expose an adhesive layer having a microstructured surface.

Because in some embodiments the adhesives are optically transparent or optically clear, the resulting articles can be optical elements or can be used to prepare optical elements. As used herein, the term "optical element" refers to an article that has an optical effect or optical application. The optical elements can be used, for example, in electronic displays, architectural applications, transportation applications, projection applications, photonics applications, and graphics applications. Suitable optical elements include, but are not limited to, screens or displays, cathode ray tubes, polarizers, reflectors. Any suitable optical film can be used in the articles. As used herein, the term "optical film" refers to a film that can be used to produce an optical effect. The optical films are typically polymer-containing films that can be a single layer or multiple layers. The optical films are flexible and can be of any suitable thickness. The optical films often are at least partially transmissive, reflective, antireflective, polarizing, optically clear, or diffusive with respect to some wavelengths of the electromagnetic spectrum (e.g., wavelengths in the visible ultraviolet, or infrared regions of the electromagnetic spectrum). Exemplary optical films include, but are not limited to, visible mirror films, color mirror films, solar reflective films, infrared reflective films, ultraviolet reflective films, reflective polarizer films such as a brightness enhancement films and dual brightness enhancement films, absorptive polarizer films, optically clear films, tinted films, and antireflective films.

In some embodiments the optical film has a coating. In general, coatings are used to enhance the function of the film or provide additional functionality to the film. Examples of coatings include, for example, hardcoats, anti-fog coatings, anti-scratch coatings, privacy coatings or a combination thereof. Coatings such as hardcoats, anti-fog coatings, and anti-scratch coatings that provide enhanced durability, are desirable in applications such as, for example, touch screen sensors, display screens, graphics applications and the like. Examples of privacy coatings include, for example, blurry or hazy coatings to give obscured viewing or louvered films to limit the viewing angle.

Some optical films have multiple layers such as multiple layers of polymer-containing materials (e.g., polymers with or without dyes) or multiple layers of metal-containing material and polymeric materials. Some optical films have alternating layers of polymeric material with different indexes of refraction. Other optical films have alternating polymeric layers and metal-containing layers. Exemplary optical films are described in the following patents: U.S. Pat. No. 6,049,419 (Wheatley et al.); U.S. Pat. No. 5,223,465 (Wheatley et al.); U.S. Pat. No. 5,882,774 (Jonza et al.); U.S. Pat. No. 6,049,419 (Wheatley et al.); U.S. Pat. No. RE 34,605 (Schrenk et al.); U.S. Pat. No. 5,579,162 (Bjornard et al.), and U.S. Pat. No. 5,360,659 (Arends et al.).

The solvent-borne adhesive blend can be coated by any suitable process, such as by, for example, knife coating, roll coating, gravure coating, rod coating, curtain coating, and air knife coating. The adhesive blend may also be printed by known methods such as screen printing or inkjet printing. The adhesive coating is typically then dried to remove the solvent. In some embodiments the coating is subjected to increased temperatures such as supplied by an oven (e.g. a forced air oven) in order to expedite the drying of the adhesive.

The adhesive blend may also be prepared in a solventless process such as hot melt mixing. A variety of hot melt mixing techniques using a variety of hot melt mixing equipment are suitable for preparing the pressure sensitive adhesives of this disclosure. Both batch and continuous mixing equipment may be used. Examples of batch methods include those using a BRABENDER (e. g. a BRABENDER PREP CENTER, commercially available from C.W. Brabender Instruments, Inc.; South Hackensack, NJ) or BANBURY internal mixing and roll milling equipment (e.g. equipment available from Farrel Co.; Ansonia, CN). Examples of continuous methods include single screw extruding, twin screw extruding, disk extruding, reciprocating single screw extruding, and pin barrel single screw extruding. Continuous methods can utilize distributive elements, pin mixing elements, static mixing elements, and dispersive elements such as MADDOCK mixing elements and SAXTON mixing elements. A single hot melt mixing apparatus may be used, or a combination of hot melt mixing equipment may be used to prepare the hot melt blends and the pressure sensitive adhesives of this disclosure. In some embodiments, it may be desirable to use more than one piece of hot melt mixing equipment. For example, one extruder, such as, for example, a single screw extruder, can be used to hot melt process the (meth)acrylate-based block copolymer. The output of this extruder can be fed into a second extruder, for example, a twin screw extruder for hot melt mixing with the additional components.

The output of the hot melt mixing is coated onto a substrate to form an adhesive layer. If a batch apparatus is used, the hot melt blend can be removed from the apparatus and placed in a hot melt coater or extruder and coated onto a substrate. If an extruder is used to prepare the hot melt blend, the blend can be directly extruded onto a substrate to form an adhesive layer in a continuous forming method. Examples of suitable substrates are described above for use with solvent-borne coating methods. In the continuous forming method, the adhesive can be drawn out of a film die and subsequently contacted to a moving plastic web or other suitable substrate. If the adhesive is to be part of a tape, the substrate may be a tape backing. In some methods, the tape backing material is coextruded with the adhesive from a film die and the multilayer construction is then cooled to form the tape in a single coating step. If the adhesive is to be a transfer tape, the adhesive layer may be a free standing film and the substrate may be a release liner or other releasing substrate. After forming, the adhesive layer or film can be solidified by quenching using both direct methods (e.g. chill rolls or water batch) and indirect methods (e.g. air or gas impingement).

A combination of solventless and solvent-borne mixing and coating techniques may also be used. For example a solvent-borne adhesive blend can be prepared, dried and hot melt coated. Similarly, a hot melt adhesive blend can be dissolved in one or more solvents and coated.

The thickness of the coated adhesive layer using either the solvent-borne coating method or solventless coating method will depend upon a variety of factors, including the desired use for the adhesive article. Typically, the thickness of the adhesive layer tends to be greater than about 5 micrometers (µm), greater than about 10 µm, greater than about 15 µm, or even greater than about 20 µm. The thickness is often less than about 1000 µm, less than about 250 µm, less than about 200 µm, or even less than about 175 µm. For example, the thickness can be from about 5 to about 1000 µm, from about 10 to about 500 µm, from about 25 to about 250 µm, or from about 50 to about 175 µm.

This disclosure includes the following embodiments.

Among the embodiments are adhesives. A first embodiment includes An adhesive consisting of: a (meth)acrylate-based block copolymer; and at least 10% by weight of a halogen-free flame retarding agent, wherein the adhesive is a flame retardant pressure sensitive adhesive or an adhesive consisting of: a (meth)acrylate-based block copolymer; and at least 10% by weight of a halogen-free flame retarding agent, wherein the adhesive is a flame retardant pressure sensitive adhesive, and at least one halogen-free additive comprising a tackifying resin, an anti-oxidant, an inorganic filler, a UV stabilizer, a plasticizer, a softening agent, or combination thereof.

Embodiment 2 is the adhesive of embodiment 1, wherein the pressure sensitive adhesive is optically clear.

Embodiment 3 is the adhesive of embodiment 1 or 2, further comprising at least one additional additive.

Embodiment 4 is the adhesive of embodiment 3, wherein the at least one additive comprises a tackifying resin, an anti-oxidant, an inorganic filler, a UV stabilizer, a UV absorber, a plasticizer, a softening agent, or combination thereof.

Embodiment 5 is the adhesive of any of embodiments 1-4, wherein the (meth)acrylate-based block copolymer comprises a (meth)acrylate di-block, tri-block, or star block copolymer.

Embodiment 6 is the adhesive of any of embodiments 1-5, wherein the (meth)acrylate-based block copolymer comprises a tri-block copolymer comprising: at least two A endblock polymeric units that are each derived from a first monoethylenically unsaturated monomer comprising a (meth)acrylate, styrene, or combination thereof, wherein each A endblock has a glass transition temperature of at least 50°C; and at least one B midblock polymeric unit that is derived from a second monoethylenically unsaturated monomer comprising a (meth)acrylate or vinyl ester, wherein each B midblock has a glass transition temperature no greater than 20°C; and wherein at least one of the first monoethylenically unsaturated monomer or the second monoethylenically unsaturated monomer comprises a (meth)acrylate monomer.

Embodiment 7 is the adhesive of embodiment 6, wherein the (meth)acrylate-based tri-block copolymer comprises a (polymethyl methacrylate)-(polyalkyl acrylate)-(polymethyl methacrylate) copolymer.

Embodiment 8 is the adhesive of embodiment 7, wherein the polyalkyl acrylate block comprises a polymer comprised from at least one acrylate monomer with an alkyl group containing 1-20 carbon atoms.

Embodiment 9 is the adhesive of embodiment 2, wherein the flame retardant optically clear pressure sensitive adhesive has a % Transmission of at least 90% and a haze of less than 10%.

Embodiment 10 is the adhesive of embodiment 2, wherein the flame retardant optically clear pressure sensitive adhesive has a % Transmission of at least 95% and a haze of less than 5%.

Embodiment 11 is the adhesive of any of embodiments 2, 9 or 10, wherein the flame retardant optically clear pressure sensitive adhesive has a yellowing factor, b*, in the range of about 0.16 - 2.0.

Embodiment 12 is the adhesive of any of embodiments 1-11, wherein the flame retardant pressure sensitive adhesive passes the Vertical Burn Test FAR 25.853a when coated on a backing comprising polyethylene terephthalate, polyurethane, or fluorothermoplastic.

Embodiment 13 is the adhesive of any of embodiments 1-12, wherein the halogen-free flame retardant additive comprises an organophosphorous compound.

Embodiment 14 is the adhesive of embodiment 13, wherein the organophosphorous compound comprises a phosphate ester, an aromatic condensed phosphate ester, a polyphosphate ester, a phosphinic acid or combination thereof.

Embodiment 15 is the adhesive of embodiment 14, wherein the organophosphorous compound comprises resorcinol(bis)diphenyl phosphate, bisphenol A bis(diphenyl phosphate), or a triaryl phosphate ester.

Among the embodiments are methods of preparing adhesives. Embodiment 16 includes the method of preparing an adhesive comprising: providing a (meth)acrylate-based block copolymer; providing a halogen-free flame retarding agent; and blending the (meth)acrylate-based block copolymer, and the halogen-free flame retarding agent to form a pressure sensitive adhesive, wherein the halogen-free flame retarding agent comprises at least 10% by weight of adhesive.

Embodiment 17 is the method of embodiment 16, wherein the pressure sensitive adhesive is optically clear.

Embodiment 18 is the method of embodiment 16 or 17, further comprising providing and blending at least one additional additive to the adhesive.

Embodiment 19 is the method of embodiment 18, wherein the at least one additional additive comprises a tackifying resin, an anti-oxidant, an inorganic filler, a UV stabilizer, a UV absorber, a plasticizer, a softening agent, or combination thereof.

Embodiment 20 is the method of any of embodiments 16-19, wherein blending comprises hot melt blending.

Embodiment 21 is the method of embodiment 20, wherein hot melt blending comprises adding the (meth)acrylate-based block copolymer and the halogen-free flame retarding agent to an extruder and extruding the resulting hot melt blend.

Embodiment 22 is the method of any of embodiments 16-19, wherein the pressure sensitive adhesive further comprises at least one solvent and blending comprises solvent blending.

Embodiment 23 is the method of embodiment 22, wherein providing a (meth)acrylate-based block copolymer comprises providing a solution of a (meth)acrylate-based block copolymer in a solvent.

Embodiment 24 is the method of embodiment 20, further comprising hot melt coating the pressure sensitive adhesive on a substrate.

Embodiment 25 is the method of embodiment 22, further comprising solvent coating the pressure sensitive adhesive on a substrate.

### Examples

These examples are merely for illustrative purposes only and are not meant to be limiting on the scope of the appended claims. All parts, percentages, ratios, etc. in the examples and the rest of the specification are by weight, unless noted otherwise. These abbreviations are used in the following examples: g = grams, mg = milligrams, min = minutes, hr = hour, sec=second, mL = milliliter, L = liter, s=seconds, rpm = revolutions per minute, cm/min = centimeters per minute, ft/min=feet per minute, kJ=kiloJoules, mil=one thousandth of an inch. Solvents and other reagents used were obtained from Sigma-Aldrich Chemical Company; Milwaukee, Wisconsin unless otherwise noted.

**Table of Abbreviations**

| **Abbreviation or Trade Designation** | **Description** |
|---|---|
| ABC-1 | Acrylic Block Copolymer-1, acrylic block copolymer having an A-B-A structure with poly(methyl methacrylate) hard block polymeric units (the A blocks), poly(n-butyl acrylate) soft block polymeric units (the B block), a weight average molecular weight of about 70,000 grams per mole, and 24 weight percent of poly(methyl methacrylate) commercially available as "LA2140E", from Kuraray America, Inc. |
| ABC-2 | Acrylic Block Copolymer-2, acrylic block copolymer having an A-B-A structure with poly(methyl methacrylate) hard block polymeric units (the A blocks), poly(n-butyl acrylate) soft block polymeric units (the B block), a weight average molecular weight of 120,000 grams per mole and 24 weight percent of poly(methyl methacrylate) commercially available as "LA410L", from Kuraray America, Inc. |
| ABC-3 | Acrylic Block Copolymer-3, acrylic block copolymer having an A-B-A structure with poly(methyl methacrylate) hard block polymeric units (the A blocks), poly(n-butyl acrylate) soft block polymeric units (the B block), a weight average molecular weight of 60,000 grams per mole, and 33 weight percent of poly(methyl methacrylate) commercially available as "LA2250", from Kuraray America, Inc. |
| ABC-4 | Acrylic Block Copolymer-4, Triblock pIBOMA/p-20A/pIBMOA, acrylic triblock copolymers of isobornyl methacrylate-co-2-octyl acrylate-co-isobornyl methacrylate prepared in Synthesis Example 1 below |
| Tack-1 | Tackifier-1, a glycerol ester of rosin acids, commercially available from Arakawa Chemical (USA), Inc. as "SUPER ESTER A-75" |
| Tack-2 | Tackifier-2, a glycerol ester of rosin acids commercially available from Eastman Chemical Company, USA, as "FORAL-85E" |
| Tack-3 | Tackifier-3, a hydrogenated rosin ester, commercially available from |
| | Arakawa Chemical (USA), Inc. as "PINECRYSTAL KE-100" |
| FR-1 | Flame Retardant-1, bisphenol-A-bis (diphenyl phosphate), flame retardant commercially available from ICL-IP America, Inc. |
| FR-2 | Flame Retardant-2, SANTICIZER-154, Triaryl Phosphate Ester, flame retardant commercially available from Ferro Corp. |
| FR-3 | Flame Retardant-3, SANTICIZER-143, modified Triaryl Phosphate Ester, flame retardant commercially available from Ferro Corp. |
| FR-4 | Flame Retardant-4, SANTICIZER-141, 2-Ethylhexyldiphenyl Phosphate, flame retardant commercially available from Ferro Corp. |
| FR-5 | Flame Retardant-5, DIOPA, diisooctyl phosphinic acid |
| SBC | Styrene Block Copolymer, KRATON G1657 M a triblock copolymer based on styrene and ethylene/butylenes with a polystyrene content of 13% commercially available from Kraton Polymers, Houston, TX |
| Film-1 | HOSTAPHAN 3SAB a primed PET (polyethylene terephthalate) film commercially available from Mitsubishi Polyester Film Inc., Greer, SC |
| Film-2 | ESTANE 58244 - an ether-based thermoplastic polyurethane material tape backing commercially available from Lubrizol Corporation, Cleveland, OH |
| Film-3 | THV 500 tetrafluoroethylene, hexafluoroethylene and vinylidene fluoride tape backing film commercially available from 3M, Dyneon, St. Paul, MN |
| Aluminum Panel | A1 2024 panels commercially available from Erickson Metals of Minnesota, Inc. |
| Fiberglass Panel | Fiber glass panels, BMS 4-17 Type 6, for peel adhesion test (available from Triumph Composite Systems, Inc.), |
| CMD Panel | CMD-50-50 panels available from C&D Zodiac Aerospace, 5701 Bolsa Avenue Huntington Beach, CA 92647 USA) |
| Carbon Fiber Panel | Carbon fiber panels, BMS 4-20 type 2, for peel adhesion test (available from Triumph Composite Systems, Inc.) |
| IBOMA | isobornyl methacrylate, commercially available from Sartomer, Exton, PA. |
| 2OA | 2-Octyl acrylate, commercially available from Monomer- Polymer and Dajac Labs, Trevose, PA. |

### Test Methods

### Vertical Burn Test

This test method is based on the criteria and procedures for showing compliance with F.A.R. Section 25.853 (July 1990) but differs from F.A.R. Section 25.853 (July 1990) in that the specimens (samples) were conditioned at 50% ±10% relative humidity for a minimum of 24 hours instead of the specified 50% ±5%.

Samples were conditioned to 21.1°C ±2.8°C (70°F ±.5°F.) and at 50% ±10% relative humidity for a minimum of 24 hours. Specimens were mounted into a U-shaped metal frame so that the two long edges and one narrow edge were held securely in a vertical orientation, unsupported by and unattached to a substrate. The exposed area of the specimen was at least 50.8 mm (two inches) wide and about 304.8 mm (12 inches) long.

The samples were exposed to the flame from a Bunsen burner. The lower edge of the sample was about 19.1 mm (3/4 inch) above the top edge of the burner. The flame was applied to the center line of the lower edge of the sample for 12 seconds or for 60 seconds as specified in the Examples. The flame time, burn length, time for burning particles to extinguish, and the number of burning particle drips if any, were recorded. Burn length was the distance from the original edge of the sample that was exposed to the flame to the point which is the farthest evidence of damage to the test specimen due to flame impingement including area of partial or complete consumption, charring, or embrittlement, but not including areas sooted, stained, warped, or discolored, nor areas where material had shrunk or melted away from the heat.

F.A.R. Section 25.853 (July 1990) subparagraphs (a)(1)(i) 60 second flame exposure require that the average bum length not exceed 152.4 mm (six inches), the average flame time after removal of the flame source not exceed 15 seconds, and drips not continue to flame for more than an average of 3 seconds after falling. F.A.R. Section 25.853 (July 1990) subparagraphs (a)(1)(ii) 12 second flame exposure require the average burn length not exceed 203 mm (8 inches), the average flame time after removal of the flame source not exceed 15 seconds, and drips not continue to flame for more than an average of 5 seconds after falling.

### Peel Adhesion Test

The test measures the force required to peel from a substrate at an angle of 180 degrees. The test was performed on conditioned tapes prepared in the examples using the procedure described in the referenced ASTM Test Method ASTM D 3330/D 3330M-04 using the substrates described below.

### Peel adhesion from glass:

A test sample was prepared by adhering a 12.7-millimiter (12.7-mm) wide tape to a glass plate and rolling over the tape once with a 2 kg roller onto the tape. The tape was tested on a tensile force tester at a plate speed of 12 inches/min (305 millimeter/min (mm/min)). Two samples were tested for each example. Averaged values were measured in ounces per inch (oz/in) and converted to Newtons per decimeter (N/dm).

### Peel adhesion from Aluminum Panel, Fiberglass Panel and Carbon Fiber Panel:

Test samples were prepared by adhering a 25.4 mm (1 inch) wide tape to a substrate (Aluminum Panel, Fiberglass Panel or Carbon Fiber Panel) and rolling over the tape 20 times with a 2 kg roller. After 24 hours dwell time at 23°C/50% RH, the tape was tested on a tensile force tester at a plate speed of 12 inches/min (305 millimeter/min (mm/min)). Three samples were tested for each sample. Averaged values were measured in ounces per inch (oz/in) and converted to Newtons per decimeter (N/dm).

### Shear Strength Test

The test measures the static shear strength of an adhesive tape in minutes. The test was performed on conditioned tapes prepared in the examples using the procedure described in the referenced ASTM Test Method ASTM D-3654/D 3654M 06 using the variations described below. The end of the tape was adhered to a stainless steel plate, suspended at a 90 degree angle from vertical, and a weight was attached to the free end of the tape. Tests were run either at room temperature (RT) or at elevated temperature (70°C)

70°C Shear Test: A test sample was prepared from the conditioned tapes prepared in the examples. A 12.7 mm (0.5 inch) wide tape was adhered to one edge of a stainless steel plate so it overlapped the panel by 25.4 mm (1 inch), and a 2-kg roller was rolled twice over the portion of the tape adhered to the panel. A 0.5 kg load was attached to the free end of the tape, and the panel was suspended at a 90 degree angle from vertical in an oven set at 70°C. The time, in minutes, for the tape to pull away from the panel was measured and the time to failure and the mode of failure were recorded. Possible failure modes are "adhesive (a)" in which the adhesive pulls away cleanly from the panel of the tape backing or "cohesive (c)" in which the adhesive splits and part of the adhesive is left on the tape and part is left on the tape backing. The test was terminated if failure had not occurred in 10,000 minutes and the result was recorded as "10,000 minutes". The data was reported as an arithmetic average of three measurements.

RT Shear Test: A test sample was recorded and tested in the same manner as for 70°C Shear except that a 1 kg weight was attached to the tape and the test panel was suspended in a controlled environment room (23°C/50% Relative Humidity).

### Microscale Combustion Calorimetry Test Method

The test was run according to ASTM D7309-07 Method A protocol. The instrument used was a Govmark MCC model MCC-2. The general method involves heating a 1-5 mg sample at a rate of 1°C/sec in a nitrogen environment. The decomposition products were fully oxidized in a combustion chamber held at 900°C in a 20% oxygen and 80% nitrogen environment. The heat release of the decomposition gases was determined from the mass of oxygen used to completely decompose the sample. Three runs for each sample were evaluated and the results averaged. The following parameters were calculated from the data: Heat release capacity η_{c} (J/g-°K) - this is the maximum specific heat release rate divided by the heating rate; Maximum specific heat release Qₘₐₓ (W/g) - the maximum value over the temperature range; Heat release temperature (K) - the temperature of the maximum specific heat release; and Specific heat release h_{c} (kJ/g) - the net heat release over the entire temperature range.

### Optical Transmittance and Haze measurements

The test was run according to ASTM Method 1003. Optical transmittance and haze of adhesive coatings were measured using a TCS Plus Spectrophotometer, Model 8870 (BYK-Gardner, Inc.). CIE Standard Illuminant A was used. The adhesive coating on a release liner was transferred to a glass microscope slide having dimensions of 75 mm by 50 mm by pressing the adhesive onto the slide and applying pressure with a rubber roller. For transmittance and color measurements, the release liner was then removed to provide the adhesive composition on the glass microscope slide. Percent luminous transmittance, b* parameter and percent haze were recorded using the measurement with no sample inside of spectrophotometer as a reference (reference: Transmittance = 100%, b*= 0 and Haze = 0%).

### Tensile Test Method

A strip 2.54 centimeters x 1.27 centimeters (1 inch x 0.5 inch) was placed between two jaws in a tensile testing machine (Instron Model 4501 from Instron Co., Canton, MA). The jaws were separated at a rate of 12"/min (305 millimeter/min (mm/min)), and the force required for breaking the strip (measured in psi and converted to kiloPascals) and the strain at break (%) were recorded.

### Synthesis Examples

### SE-1. Generation of Acrylic Triblock Copolymer IBOMA-2OA-IBOMA

Acrylic triblock copolymers of isobornyl methacrylate-co-2-octyl acrylate-co-isobornyl methacrylate were prepared using the following living free radical polymerization methods.

### Step 1: Preparation of an 85,000 Molecular Weight poly-2-OA Midblock Macroinitiator:

300 g of 2-OA was passed twice through a column packed with inhibitor removal resin (Alfa Aesar) and collected. 283 g of the purified 2-OA was added to a round flask with 180 g of toluene, and the flask was sealed with a rubber septa and bubbled with nitrogen for 30 minutes. 0.115 g of copper (II) bromide and 0.15 g of M₆Tren (ATRP Solutions INC.) were dissolved in 9 g of dimethyl formide, sealed, and bubbled with nitrogen for five minutes. 4 mL of this solution was then transferred to the sealed round flask via syringe. 1.1 g of 1,4-dibromoadipate and 0.38 g of Tin(II) ethyl hexanoate (Aldrich) were dissolved in 4 g of toluene, sealed, and bubbled with nitrogen for 5 minutes. 3 mL of this solution was then transferred via syringe to the large round flask. The round flask was then heated to 70°C using an oil bath and held at this temperature for 48 hours. Monomer conversion was measured using NMR and found to be approximately 90%. Gel Permeation Chromatography (GPC) analysis confirmed the molecular weight of 84,800 gram per mole. A rotary evaporator was used to remove solvent and residual monomer to yield the macroinitiator product.

### Step 2: End Capping of Midblock p2OA with IBOMA

150 g of the macroinitiator generated in step 1 was dissolved in 60 g of toluene with 0.6 g of the copper (II) bromide solution prepared in step 1 above. This was prepared in a large sealed flask which was then bubbled with nitrogen for 20 minutes. 200 g of IBOMA was passed twice through a column of inhibitor removal resin (Alfa Aesar) and collected. 120 g of the purified IBOMA was mixed with 1.7 g of tin (II) ethyl hexanoate in a sealed vessel that was bubbled with nitrogen for 20 minutes. 20 g of this solution was transferred via syringe to the sealed vessel containing the macroinitiator and this flask was heated at 65°C for 24 hours. GPC revealed a polymer molecular weight of 106,000 grams per mole. ¹H-NMR analysis indicated that the ratio of 2-OA to IBOMA in the triblock copolymer was roughly 85:15. The triblock copolymer was separated by precipitation into cold methanol, collected, and dried overnight in a vacuum oven.

### Microscale Combustion Calorimetry Test Screening

A variety of polymeric material samples were screened using the Microscale Combustion Calorimetry Test Method described above. The results are shown in Table A. Samples A, and C-F were used as received. Sample B was made by dissolving 0.65g ABC-2 and 0.35g FR-1 in 1 gram of toluene. Samples of 2-5 mg were cut from the solid materials (Samples A and C-F). For Sample B a 2-5 mg drop of the solution was coated onto a release liner to a thickness of approximately 51 micrometers (2 mils), dried for 30 min at 110°C to give a 2-5 mg solid sample.

**Table A**

| Sample | Sample Composition | Heat Release Capacity, η_{c} (J/g-K) | Maximum Specific Heat Release, Qₘₐₓ (W/g) | Heat Release temperature, Tₘₐₓ (K) | Specific Heat Release, h_{c} (kJ/g) |
|---|---|---|---|---|---|
| A | ABC-2 | 403 | 408 | 670 | 24.5 |
| B | ABC-2/FR-1 (65/35) | 353 | 359 | 582 | 20.2 |
| C | ABC-1 | 413 | 401 | 662 | 23.4 |
| D | ABC-3 | 382 | 391 | 661 | 22.1 |
| E | FR-1 | 357 | 345 | 594 | 23.2 |
| F | SBC | 1031 | 1053 | 735 | 36.0 |

### Preparation of Acrylic Block Copolymer Adhesive Coated Tapes:

### Examples 1-24 and Comparative Examples C1-C15:

A series of adhesive coatings were prepared by making adhesive solutions and solvent coating the solutions. The general procedure followed was:
Pellets of acrylic block copolymer (ABC-1, ABC-2 or ABC-3) were dissolved with or without tackifier (Tack-1, Tack-2, or Tack-3) and with or without halogen-free flame retardant (FR-1) in toluene to provide solutions having a concentration of 50% by weight solids, by rolling in jars on roller mill at room temperature overnight. The compositions are shown in Table 1 below. All solutions were coated onto backing by a knife coater targeting a dry coating thickness of approximately 51 micrometers (2 mils). The coatings were dried in a forced air oven at 70°C for 15 min and then stored in a constant temperature (23°C) and constant humidity (RH 50 %) room.

**Table 1**

| Example Adhesive | Acrylic Block Copolymer (parts by wt) | Tackifier Used (parts by wt) | Flame Retardant Used (parts by wt) | Example Tape | Backing |
|---|---|---|---|---|---|
| 1 | ABC-1 (67) | None | FR-1 (33) | 1-1 | Film-3 |
| 1 | ABC-1 (67) | None | FR-1 (33) | 1-2 | Film-2 |
| 2 | ABC-1 (37) | Tack-1 (30) | FR-1 (33) | 2-1 | Film-3 |
| 2 | ABC-1 | Tack-1 | FR-1 | 2-2 | Film-2 |
| | (37) | (30) | (33) | | |
| 3 | ABC-2 (70) | Tack-1 (10) | FR-1 (20) | 3-1 | Film-3 |
| 3 | ABC-2 (70) | Tack-1 (10) | FR-1 (20) | 3-2 | Film-2 |
| 4 | ABC-2 (70) | Tack-1 (20) | FR-1 (10) | 4-1 | Film-3 |
| 5 | ABC-2 (72) | Tack-1 (20) | FR-1 (5) | 5-1 | Film-3 |
| 6 | ABC-2 (67) | None | FR-1 (33) | 6-1 | Film-3 |
| 7 | ABC-2 (67) | None | FR-4 (33) | 7-1 | Film-3 |
| 8 | ABC-2 (67) | None | FR-3 (33) | 8-1 | Film-3 |
| 9 | ABC-2 (60) | Tack-1 (10) | FR-1 (30) | 9-1 | Film-2 |
| 10 | ABC-2 (60) | Tack-1 (20) | FR-1 (20) | 10-1 | Film-2 |
| 11 | ABC-2 (59) | None | FR-1 (41) | 11-1 | Film-3 |
| 12 | ABC-2 (50) | None | FR-1 (50) | 12-1 | Film-3 |
| 13 | ABC-2 (50) | Tack-1 (30) | FR-1 (20) | 13-1 | Film-2 |
| 14 | ABC-2 (40) | Tack-1 (40) | FR-1 (20) | 14-1 | Film-2 |
| 15 | ABC-2 (70) | Tack-1 (10) | FR-1 (20) | 15-1 | Film-3 |
| 15 | ABC-2 (70) | Tack-1 (10) | FR-1 (20) | 15-2 | Film-2 |
| 16 | ABC-2 (67) | None | FR-1 (33) | 16-1 | Film-3 |
| 17 | ABC-2 (70) | Tack-2 (10) | FR-1 (20) | 17-1 | Film-3 |
| 18 | ABC-2 (50) | Tack-2 (30) | FR-1 (20) | 18-1 | Film-3 |
| 19 | ABC-2 (70) | Tack-3 (10) | FR-1 (20) | 19-1 | Film-3 |
| 20 | ABC-2 (60) | Tack-3 (20) | FR-1 (20) | 20-1 | Film-3 |
| 21 | ABC-2 (50) | Tack-3 (30) | FR-1 (20) | 21-1 | Film-3 |
| 22 | ABC-2 (40) | Tack-3 (40) | FR-1 (20) | 22-1 | Film-3 |
| 23 | ABC-4 (50) | None | FR-1 (50) | 23-1 | Film-3 |
| 24 | ABC-4 (50) | None | FR-2 (50) | 24-1 | Film-3 |
| C1 | ABC-1 (100) | None | None | C1-1 | Film-3 |
| C2 | ABC-2 (100) | None | None | C2-1 | Film-3 |
| C3 | ABC-2 (70) | Tack-1 (30) | None | C3-1 | Film-3 |
| C3 | ABC-2 (70) | Tack-1 (30) | None | C3-2 | Film-2 |
| C4 | ABC-2 (60) | Tack-1 (40) | None | C4-1 | Film-2 |
| C5 | ABC-2 (50) | Tack-1 (50) | None | C5-1 | Film-2 |
| C6 | ABC-3 (100) | None | None | C6-1 | Film-3 |
| C7 | ABC-3 (67) | None | FR-2 (33) | C7-1 | Film-3 |
| C8 | ABC-3 (67) | None | FR-5 (33) | C8-1 | Film-3 |
| C9 | ABC-3 (70) | Tack-1 (30) | None | C9-1 | Film-3 |
| C9 | ABC-3 (70) | Tack-1 (30) | None | C9-2 | Film-2 |
| C10 | ABC-2 (70) | Tack-2 (30) | None | C10-2 | Film-3 |
| C11 | ABC-2 (50) | Tack-2 (50) | None | C11-1 | Film-3 |
| C12 | ABC-2 (70) | Tack-3 (30) | None | C12-1 | Film-3 |
| C13 | ABC-2 (60) | Tack-3 (40) | None | C13-1 | Film-3 |
| C14 | ABC-2 (50) | Tack-3 (50) | None | C14-1 | Film-3 |
| C15 | ABC-2 (40) | Tack-3 (60) | None | C15-1 | Film-3 |

### Examples 25-27 and Comparative Examples C18-C21:

A series of adhesive coatings were prepared by hot melt coating. The general procedure followed was:
A quantity of 150 g of acrylic block copolymer, tackifier, halogen-free flame retardant and antioxidant was fed into a conical twin screw extruder. The compositions are shown in Table 2 below. The compositions were allowed to mix and melt in the compounding zones with temperature ranging from 177°C to 204°C (350°F to 400°F) from zone 1 to zone 10 under a pressure of 1127 rpm for the motor and 300 rpm for the screw. After 3 minutes of compounding under simultaneous heat and mechanical mixing, the pressure was reduced to 376 rpm for the motor and 100 rpm for the screw, respectively. The adhesive was then pumped into a coating nip under a pressure of 100 rpm and with a line speed of 240 cm/min (8 ft/min) to obtain a 51 micrometer (2 mils) thick adhesive layer between two silicone liners. When tape samples were prepared, the adhesive layer was then laminated to the film backing.

**Table 2**

| Example Adhesive | Acrylic Block Copolymer (parts by wt) | Tackifier Used (parts by wt) | Flame Retardant Used (parts by wt) | Example Tape | Backing |
|---|---|---|---|---|---|
| 25 | ABC-2 (70) | Tack-1 (10) | FR-1 (20) | 25-1 | Film-2 |
| 26 | ABC-2 (70) | Tack-3 (10) | FR-1 (20) | 26-1 | Film-2 |
| 27 | ABC-2 (70) | Tack-2 (10) | FR-1 (20) | ---- | ---- |
| C18 | ABC-2 (100) | None | None | ---- | ---- |
| C19 | ABC-2 (70) | Tack-1 (30) | None | ---- | ---- |
| C20 | ABC-2 (70) | Tack-3 (30) | None | ---- | ---- |
| C21 | ABC-2 (70) | Tack-2 (30) | None | ---- | ---- |

### Flame Retardant Properties of Acrylic Block Copolymer Adhesive tapes:

Samples of the adhesive layers coated onto backings prepared above were tested for flame retardant properties using the Vertical Burn Test Method described above. The constructions tested were either the adhesive layer coated on the backing (tape) or constructions where the tape was laminated to a panel. Table 3 contains the Vertical Burn Test data for the samples that were solvent coated and had burn test times of either 12 seconds or 60 seconds as noted, Table 4 contains the Vertical Burn Test data for the samples that were hot melt coated and had burn test times of 12 seconds

**Table 3**

| Example | Burn Test Time (s) | Construction | Flame Time (s) | Burned Length (in) | Burning Particle Time (s) | Number of Burning Particle Drips |
|---|---|---|---|---|---|---|
| 1-1A | 60 | Tape 1-1 | 0 | 6 | 1-2 | 3 |
| 1-1B | 60 | Tape 1-1/CMD Panel | 0 | 2 3/8 | No Drips | 0 |
| 1-2A | 12 | Tape 1-2 | 0 | 2 3/8 | 1-2 | 0 |
| 1-2B | 12 | Tape 1-2/Carbon Fiber Panel | 0 | 2 | No Drips | 3 |
| 1-2C | 12 | Tape 1-2/CMD Panel | 0 | 1 3/8 | No Drips | 0 |
| 2-1A | 60 | Tape 2-1 | 0 | 67/8 | No Drips | 0 |
| 2-2A | 12 | Tape 2-2 | 0 | 3 | 1-5 | 0 |
| 2-2B | 12 | Tape 2-2/Carbon Fiber Panel | 1 | 1 5/8 | No Drips | 0 |
| 2-2C | 12 | Tape 2-2/CMD Panel | 0 | 1 1/2 | No Drips | 0 |
| 3-1A | 60 | Tape 3-1 | 0 | 53/4 | No Drips | 0 |
| 3-1B | 60 | Tape 3-1/CMD Panel | 0 | 1 7/8 | No Drips | 0 |
| 3-2A | 12 | Tape 3-2 | 0 | 3.125 | 1-2 | 2 |
| 4-1A | 60 | Tape 4-1 | 0 | 11 1/8 | 1 | >10 |
| 4-1B | 60 | Tape 4-1/CMD Panel | 0 | 13/4 | 0 | 0 |
| 5-1A | 60 | Tape 5-1 | 0 | 71/8 | 0 | 0 |
| 5-1B | 60 | Tape 5-1/CMD Panel | 0 | 1 3/8 | 0 | 0 |
| 6-1A | 60 | Tape 6-1 | 0 | 6 | No Drips | 2 |
| 6-1B | 60 | Tape 6-1/CMD Panel | 0 | 21/4 | No Drips | 0 |
| 7-1A | 60 | Tape 7-1 | 0 | 6 | 3 | 0 |
| 8-1A | 60 | Tape 8-1 | 0 | 6.5 | No Drips | 0 |
| 9-1A | 12 | Tape 9-1 | 0 | 1.875 | 1-2 | 3 |
| 10-1A | 12 | Tape 10-1 | 0 | 1.125 | No Drips | 0 |
| 11-1A | 60 | Tape 11-1 | 0 | 5 | 2 | 1 |
| 12-1A | 60 | Tape 12-1 | 0 | 4.875 | 0 | 0 |
| 13-1A | 12 | Tape 13-1 | 0 | 3 1/2 | 1-2 | 5 |
| 14-1A | 12 | Tape 14-1 | 0 | 3 | No Drips | 0 |
| 15-1A | 60 | Tape 15-1 | 2 | 5 1/8 | No Drips | 0 |
| 15-1B | 60 | Tape 15-1/CMD Panel | 0 | 2 1/8 | No Drips | 0 |
| 15-2A | 12 | Tape 15-2 | 0 | 27/8 | 1 | 2 |
| 16-1A | 60 | Tape 16-1 | 0 | 61/2 | 1 | 1 |
| 16-1B | 60 | Tape 16-1/CMD Panel | 0 | 21/2 | 0 | 0 |
| 17-1A | 60 | Tape 17-1 | 0 | 8 | 1 | 2 |
| 18-1A | 60 | Tape 18-1 | 0 | 8 1/2 | 1 | 2 |
| 18-1B | 60 | Tape 18-1/CMD Panel | 0 | 1 1/2 | 0 | 0 |
| 19-1A | 60 | Tape 19-1 | 0 | 71/4 | 1 | 3 |
| 20-1A | 60 | Tape 20-1 | 0 | 8 | No Drips | 0 |
| 20-1B | 60 | Tape 20-1/CMD Panel | 0 | 4 1/8 | No Drips | 0 |
| 21-1A | 60 | Tape 21-1 | 0 | 53/4 | 1 | 1 |
| 21-1B | 60 | Tape 21-1/CMD Panel | 0 | 2 5/8 | No Drips | 0 |
| 22-1A | 60 | Tape 22-1 | 0 | 71/4 | No Drips | 0 |
| 23-1A | 60 | Tape 23-1 | 0 | 61/2 | 0 | 0 |
| 23-1B | 60 | Tape 23-1/CMD Panel | 0 | 2 | 0 | 0 |
| 24-1A | 60 | Tape 24-1 | 0 | 63/4 | 3 | 4 |
| C16 | 60 | Film-3 | 0 | 6.56 | No Drips | |
| C1-1A | 60 | Tape C1-1 | None - Totally Burns Up During | Totally Burns Up | 1-2 | >10 |
| C2-1A | 60 | Tape C2-1 | None - Totally Burns Up During | Totally Burns Up | 1-2 | 0 |
| C3-1A | 60 | Tape C3-1 | None - Totally Burns Up During | Totally Burns Up | No Drips | 0 |
| C3-2A | 12 | Tape C3-2 | 0 | 2.375 | No Drips | 0 |
| C4-1A | 12 | Tape C4-1 | 0 | 3.125 | 1-2 | 2 |
| C5-1A | 12 | Tape C5-1 | 0 | 3 1/2 | 1-2 | 2 |
| C6-1A | 60 | Tape C6-1 | None - Totally Burns Up During | Totally Burns Up | 2-3 | >10 |
| C7-1A | 60 | Tape C7-1 | 0 | 5.5 | No Drips | 0 |
| C8-1A | 60 | Tape C8-1 | 0 | 5 | No Drips | |
| C9-1A | 60 | Tape C9-1 | None - | Totally | No | 0 |
| | | | Totally Burns Up During | Burns Up | Drips | |
| C9-2A | 12 | Tape C9-2 | 0 | 3 3/8 | 0 | 1 |
| C10-1A | 60 | Tape C10-1 | None - Totally Burns Up During | Totally Burns Up | 1 | 1 |
| C11-1A | 60 | Tape C11-1 | None - Totally Burns Up During | Totally Burns Up | 1 | 9 |
| C12-1A | 60 | Tape C12-1 | None - Totally Burns Up During | Totally Burns Up | No Drips | 0 |
| C13-1A | 60 | Tape C13-1 | None - Totally Burns Up During | Totally Burns Up | 1 | 6 |
| C14-1A | 60 | Tape C14-1 | None - Totally Burns Up During | Totally Burns Up | 1 | 5 |
| C15-1A | 60 | Tape C15-1 | None - Totally Burns Up During | Totally Burns Up | 2 | 10 |

**Table 4**

| Example | Construction | Flame Time (s) | Burned Length (in) | Drips | Burned Particles |
|---|---|---|---|---|---|
| 25-1A1 | Tape 25-1 | 0 | 3 | many | none |
| 25-1A2 | Tape 25-1 | 0 | 3.25 | many | 3 |
| 25-1B1 | Tape 25-1/CMD Panel | 0 | 1.88 | 0 | 0 |
| 25-1B2 | Tape 25-1/CMD Panel | 1 | 1.50 | 0 | 0 |
| 25-1C1 | Tape 25-1/Carbon Fiber Panel | 0 | 1.94 | 0 | 0 |
| 25-1 C2 | Tape 25-1/Carbon Fiber Panel | 0 | 2.13 | 0 | 0 |
| 26-1A1 | Tape 26-1 | 0 | 3.25 | many | 3 |
| 26-1A2 | Tape 26-1 | 1 | 2.375 | many | 0 |
| 26-1B1 | Tape 26-1/CMD Panel | 2 | 1.38 | 0 | 0 |
| 26-1B2 | Tape 26-1/CMD Panel | 0 | 1.75 | 0 | 0 |
| 26-1C1 | Tape 26-1/Carbon Fiber Panel | 0 | 1.94 | 0 | 0 |
| 26-1C2 | Tape 26-1/Carbon Fiber Panel | 0 | 2.13 | 0 | 0 |
| C17A | Film-2 | 2.5 | 7.88 | 1 | 0 |
| C17B | Film-2 | 0 | 4 | 1 | 0 |

### Adhesive Properties of Acrylic Block Copolymer Adhesive tapes:

Tape samples for adhesive testing were prepared similarly to the tape samples described above except that Film-1 was used as the backing. The samples were tested for Shear Strength (both at RT and 70°C) and for Peel Adhesion from Glass, Aluminum, Fiberglass and Carbon Fiber Panels as described in the Test Methods above. Data for solvent coated samples are presented in Table 5 below and data for hot melt coated samples are presented in Table 6 below.

**Table 5**

| Example Adhesive | Shear Strength (min) | | 180° Peel Adhesion (N/dm (oz/in)) | | | |
|---|---|---|---|---|---|---|
| | RT | 70° C | Glass | Al 2024 | Fiberglass | Carbon fiber |
| 1 | 10000 | 3 (c) | 44 (40) | NT | NT | NT |
| 2 | 102 (c) | 0 | 132 (121) | NT | NT | NT |
| 3 | 10000 | 1986 (c) | 20 (18) | 41 (37) | 34 (31) | 53 (48) |
| 4 | 10000 | 566 (a) | 62 (57) | NT | NT | NT |
| 5 | 10000 | 599 (a) | 66 (60) | NT | NT | NT |
| 9 | 10000 | 14 (c) | 41 (37) | 47 (43) | 35 (32) | 27 (25) |
| 10 | 10000 | 157 (c) | 55 (50) | 42 (38) | 45 (41) | 35 (32) |
| 13 | 10000 | 81 (c) | 69 (63) | 69 (63) | 46 (42) | 57 (52) |
| 14 | 10000 | 35 (c) | 103 (94) | 97 (89) | 77(71) | 73 (67) |
| 15 | 10000 | 175 (c) | 26 (24) | 60 (55) | 14(13) | 36 (33) |
| 17 | 10000 | 653 (c) | 38 (35) | 22 (20) | 27 (25) | 35 (32) |
| 18 | 10000 | 56 (c) | 57 (52) | 49 (45) | 25 (23) | 43 (39) |
| 19 | 10000 | 715 (c) | 45 (41) | 33 (30) | 18(16) | 33 (30) |
| 20 | 10000 | 386 (c) | 60 (55) | 57 (52) | 47 (43) | 62 (57) |
| 21 | 10000 | 91 (c) | 89 (81) | 84 (77) | 72 (66) | 84 (77) |
| 22 | 10000 | 82 (c) | 147 (134) | 126 (115) | 85 (78) | 90 (82) |
| C3 | 10000 | 667 (c) | 42 (38) | 70 (64) | 67(61) | 74 (68) |
| C4 | 10000 | 1132 (a) | 51 (47) | 88 (81) | 73 (67) | 89(81) |
| C5 | 10000 | 671 (c) | 149 (136) | 130 (119) | 92 (84) | 99 (90) |
| C9 | 10000 | 2068 (a) | 25 (23) | 71 (65) | 36 (33) | 56(51) |
| C10 | 10000 | 727 (a) | 24 (22) | 27 (25) | 11(10) | 2 (2) |
| C11 | 10000 | 3918 (c) | 25 (23) | 10 (9) | 4(4) | 2 (2) |
| C12 | 10000 | 6573 (c) | 61 (56) | 69 (63) | 51 (47) | 61 (56) |
| C13 | 10000 | 3729 (c) | 101 (92) | 102 (93) | 64 (58) | 56(51) |
| C14 | 10000 | 5259 (c) | 19 (17) | 19 (17) | 24 (22) | 29 (26) |
| C15 | 10000 | 10000 | 8 (7) | 14 (13) | 7(6) | 6 (5) |

| | | | | | | |
|---|---|---|---|---|---|---|
| NT = Not Tested | | | | | | |

**Table 6**

| Example Adhesive | Shear Strength (min) | | 180° Peel Adhesion (N/dm (oz/in)) | | | |
|---|---|---|---|---|---|---|
| | RT | 70° C | Glass | A1 2024 | Fiberglass | Carbon fiber |
| 25 | 10000 | 10000 | 55 (50) | 42 (38) | 26 (24) | 36 (33) |
| 26 | 10000 | 10000 | 56 (51) | 49 (45) | 49 (45) | 53 (49) |
| 27 | 10000 | 10000 | 14 (13) | (3) | 2 (2) | 3 (3) |
| C18 | 10000 | 10000 | 53 (48) | 30 (28) | 26 (24) | 31 (28) |
| C19 | 10000 | 10000 | 56 (51) | 41 (37) | 25 (23) | 49 (45) |
| C20 | 10000 | 10000 | 65 (59) | 47 (43) | 41 (37) | 48 (44) |
| C21 | 10000 | 10000 | 56 (51) | 48 (44) | 38 (35) | 41 (37) |

### Aging of Adhesive Coatings:

Samples of adhesive coatings prepared as described above, were aged with one of two sets of conditions: 70°C for 168 hours and 50°C/95% Relative Humidity for 168 hours. After aging the samples of adhesive coatings were put in a CTH room (23°C/50% RH) for 24 hours prior to performing RT and 70° C Shear testing. Solvent coated samples are presented in Table 7, hot melt coated samples in Table 8.

**Table 7**

| Example Adhesive | Aging Test Conditions | Shear Strength (min) | | 180° Peel Adhesion (N/dm (oz/in)) | | | |
|---|---|---|---|---|---|---|---|
| | | RT | 70°C | Glass | A1 2024 | Fiberglass | Carbon fiber |
| 3 | Initial | 10000 | 4030 | 23 (21) | 18 (16) | 51 (47) | 61 (56) |
| 19 | | 10000 | 2540 | 25 (23) | 23 (21) | 54 (49) | 66 (60) |
| C3 | | 10000 | 1370 | 43 (39) | 46 (42) | 69 (63) | 81 (74) |
| C12 | | 10000 | 7700 | 58 (53) | 50 (46) | 78 (71) | 87 (79) |
| 3 | 70°C/168 h | 10000 | 4600 | 21 (19) | 47 (43) | 50 (46) | 53 (48) |
| 19 | | 10000 | 5400 | 23 (21) | 51 (47) | 54 (49) | 64 (58) |
| C3 | | 10000 | 2700 | 42 (38) | 58 (53) | 41 (37) | 53 (48) |
| C12 | | 10000 | 10000 | 58 (53) | 71 (65) | 56 (51) | 62 (57) |
| 3 | 50°C/95% RH/168 h | 10000 | 10000 | 27 (25) | 54 (49) | 53 (48) | 56 (51) |
| 19 | | 10000 | 7200 | 42 (38) | 50 (46) | 64 (58) | 53 (48) |
| C3 | | 10000 | 2040 | 38 (35) | 49 (45) | 44 (40) | 49 (45) |
| C12 | | 10000 | 10000 | 33 (30) | 56 (51) | 67 (61) | 58 (53) |

**Table 8**

| Example Adhesive | Aging Test Conditions | Shear Strength (min) | | 180° Peel Adhesion (N/dm (oz/in)) | | | |
|---|---|---|---|---|---|---|---|
| | | RT | 70°C | Glass | A1 2024 | Fiberglass | Carbon fiber |
| 25 | Initial | 10000 | 10000 | 31 (28) | 24 (22) | 62 (57) | 66 (60) |
| 26 | | 10000 | 10000 | 36 (33) | 34 (31) | 73 (67) | 73 (67) |
| C20 | | 10000 | 10000 | 39 (36) | 20 (18) | 62 (57) | 81 (74) |
| C21 | | 10000 | 10000 | 31 (28) | 19 (17) | 46 (42) | 79 (72) |
| 25 | 70°C/168 h | 10000 | 10000 | 32 (29) | 51 (47) | 39 (36) | 62 (57) |
| 26 | | 10000 | 10000 | 39 (36) | 57 (52) | 46 (42) | 48 (44) |
| C20 | | 10000 | 10000 | 37 (34) | 44 (40) | 38 (35) | 39 (36) |
| C21 | | 10000 | 10000 | 43 (39) | 53 (48) | 12 (11) | 46 (42) |
| 25 | 50°C/95% RH/168 h | 10000 | 10000 | 55 (50) | 42 (38) | 46 (42) | 71 (65) |
| 26 | | 10000 | 10000 | 56 (51) | 45 (41) | 60 (55) | 43 (39) |
| C20 | | 10000 | 10000 | 56 (51) | 44 (40) | 30 (27) | 48 (44) |
| C21 | | 10000 | 10000 | 65 (59) | 46 (42) | 34 (31) | 32 (29) |

### Optical Properties of Acrylic Block Copolymer Adhesives:

The optical properties of selected coated adhesive samples were tested according to the test methods given above. The results are presented in Table 9.

**Table 9**

| Example Adhesive | Transmittance (%) | Haze (%) | b* |
|---|---|---|---|
| 1 | 91.7 | 1.6 | 0.18 |
| 3 | 91.6 | 1.3 | 0.19 |
| 6 | 91.3 | 3.0 | 0.10 |
| 9 | 91.5 | 1.5 | 0.28 |
| 10 | 91.4 | 1.2 | 0.31 |
| 13 | 91.3 | 1.5 | 0.35 |
| 14 | 91.0 | 1.4 | 0.50 |
| 15 | 91.5 | 4.4 | 0.23 |
| 16 | 91.7 | 1.1 | 0.14 |
| 17 | 92.8 | 1.4 | 0.21 |
| 18 | 88.6 | 4.0 | 1.07 |
| 19 | 92.3 | 1.1 | 0.16 |
| 20 | 92.1 | 0.9 | 0.17 |
| 21 | 92.0 | 0.8 | 0.21 |
| 22 | 91.9 | 0.6 | 0.18 |
| 25 | 91.9 | 1.9 | 0.56 |
| 26 | 92.3 | 1.2 | 0.23 |
| 27 | 89.3 | 10.8 | 0.63 |
| C3 | 91.7 | 1.0 | 0.33 |
| C5 | 91.5 | 1.3 | 0.30 |
| C9 | 91.5 | 4.3 | 0.32 |
| C10 | 90.2 | 1.9 | 0.80 |
| C11 | 88.1 | 1.8 | 2.33 |
| C12 | 92 | 0.7 | 0.17 |
| C13 | 92.3 | 1.0 | 0.15 |
| C14 | 92.1 | 0.7 | 0.17 |
| C15 | 91.8 | 0.8 | 0.23 |
| C18 | 92.5 | 1.7 | 0.24 |
| C19 | 91.7 | 1.4 | 0.51 |
| C20 | 92.42 | 1.0 | 0.22 |
| C21 | 92.8 | 1.5 | 0.21 |

### Mechanical Properties of Acrylic Block Copolymer Adhesives:

The mechanical properties of selected coated adhesive samples were tested according to the test methods given above. The results are presented in Table 10.

**Table 10**

| Example Adhesive | Elongation (%) | Tensile Strength (kPa) |
|---|---|---|
| C3 | 600.5 | 3,913 |
| 3 | 670.5 | 3,620 |
| C12 | 586.5 | 3,530 |
| 19 | 663.5 | 3,720 |
| C19 | 708.0 | 6,630 |
| 25 | 773.5 | 5,843 |
| C20 | 795.5 | 7,250 |
| 26 | 816.5 | 5,650 |

## Claims

1. An adhesive consisting of:
a (meth)acrylate-based block copolymer; and
at least 10% by weight of a halogen-free flame retarding agent, wherein the adhesive is a flame retardant pressure sensitive adhesive.

2. An adhesive consisting of:
a (meth)acrylate-based block copolymer; and
at least 10% by weight of a halogen-free flame retarding agent, wherein the adhesive is a flame retardant pressure sensitive adhesive, and
at least one halogen-free additive comprising a tackifying resin, an anti-oxidant, an inorganic filler, a UV stabilizer, a plasticizer, a softening agent, or combination thereof.

3. The adhesive of claim 1, wherein the (meth)acrylate-based block copolymer comprises a (meth)acrylate di-block, tri-block, or star block copolymer.

4. The adhesive of claim 1, wherein the (meth)acrylate-based block copolymer comprises a tri-block copolymer comprising:
at least two A endblock polymeric units that are each derived from a first monoethylenically unsaturated monomer comprising a (meth)acrylate, wherein each A endblock has a glass transition temperature of at least 50°C, as may be determined using Differential Scanning Calorimetry or Dynamic Mechanical Analysis; and
at least one B midblock polymeric unit that is derived from a second monoethylenically unsaturated monomer comprising a (meth)acrylate or vinyl ester, wherein each B midblock has a glass transition temperature no greater than 20°C, as may be determined using Differential Scanning Calorimetry or Dynamic Mechanical Analysis; and wherein at least one of the first monoethylenically unsaturated monomer or the second monoethylenically unsaturated monomer comprises a (meth)acrylate monomer.

5. The adhesive of claim 4, wherein the (meth)acrylate-based tri-block copolymer comprises a (polymethyl methacrylate)-(polyalkyl acrylate)-(polymethyl methacrylate) copolymer.

6. The adhesive of claim 1, wherein the flame retardant pressure sensitive adhesive is optically clear, having a % Transmission of at least 90%, a haze of less than 10%, and a yellowing factor, b*, in the range of about 0.16 - 2.0, as may be determined according to ASTM 1003.

7. The adhesive of claim 1, wherein the flame retardant pressure sensitive adhesive passes the Vertical Burn Test FAR 25.853a when coated on a backing comprising polyurethane or fluorothermoplastic.

8. The adhesive of claim 1, wherein the halogen-free flame retardant additive comprises a phosphate ester.

9. The method of preparing an adhesive comprising:
providing a (meth)acrylate-based block copolymer;
providing a halogen-free flame retarding agent; and
blending the (meth)acrylate-based block copolymer, and the halogen-free flame retarding agent to form a pressure sensitive adhesive, wherein the halogen-free flame retarding agent comprises at least 10% by weight of adhesive, and optionally providing and blending at least one additional additive comprising a tackifying resin, an anti-oxidant, an inorganic filler, a UV stabilizer, a plasticizer, a softening agent, or combination thereof, to the adhesive.

## Patentansprüche

1. Klebstoff, bestehend aus:
einem (Meth)acrylat-basierten Blockcopolymer; und
zu mindestens 10 Gew.-% einem halogenfreien Flammenhemmstoff,
worin der Klebstoff ein flammenhemmender druckempfindlicher Klebstoff ist.

2. Klebstoff, bestehend aus:
einem (Meth)acrylat-basierten Blockcopolymer; und
zu mindestens 10 Gew.-% einem halogenfreien Flammenhemmstoff,
worin der Klebstoff ein flammenhemmender druckempfindlicher Klebstoff ist, und
mindestens einem halogenfreien Zusatzstoff, umfassend ein klebrigmachendes Harz, ein Antioxidationsmittel, ein anorganisches Füllmittel, ein UV-Stabilisierungsmittel, einen Weichmacher, ein Enthärtungsmittel oder eine Kombination davon.

3. Klebstoff nach Anspruch 1, worin das (Meth)acrylat-basierte Blockcopolymer ein (Meth)acrylat-Diblock-, -Triblock- oder -Sternblockcopolymer umfasst.

4. Klebstoff nach Anspruch 1, worin das (Meth)acrylat-basierte Blockcopolymer ein Triblockcopolymer umfasst, das Folgendes umfasst:
mindestens zwei A-Endblock-Polymereinheiten, die jeweils abgeleitet sind von einem ersten monoethylenisch ungesättigten Monomer, umfassend ein (Meth)acrylat, worin jeder A-Endblock eine Glasübergangstemperatur von mindestens 50 °C aufweist, wie mittels differentieller Scanningkalorimetrie oder dynamisch-mechanischer Analyse bestimmt werden kann; und
mindestens eine B-Mittelblock-Polymereinheit, die abgeleitet ist von einem zweiten monoethylenisch ungesättigten Monomer, umfassend ein (Meth)acrylat oder einen Vinylester, worin jeder B-Mittelblock eine Glasübergangstemperatur von nicht mehr als 20 °C aufweist, wie mittels differentieller Scanningkalorimetrie oder dynamisch-mechanischer Analyse bestimmt werden kann; und worin mindestens eines des ersten monoethylenisch ungesättigten Monomers oder des zweiten monoethylenisch ungesättigten Monomers ein (Meth)acrylatmonomer umfasst.

5. Klebstoff nach Anspruch 4, worin das (Meth)acrylat-basierte Triblockcopolymer ein (Polymethylmethacrylat)-(Polyalkylacrylat)-(Polymethylmethacrylat)-Copolymer umfasst.

6. Klebstoff nach Anspruch 1, worin der flammenhemmende druckempfindliche Klebstoff optisch klar ist mit einer prozentualen Durchlässigkeit von mindestens 90 %, einer Trübung von weniger als 10 % und einem Vergilbungsfaktor, b*, im Bereich von etwa 0,16 bis 2,0, wie nach ASTM 1003 bestimmt werden kann.

7. Klebstoff nach Anspruch 1, worin der flammenhemmende druckempfindliche Klebstoff die Vertikalbrennprüfung FAR 25.853a besteht, wenn er auf eine Unterlage aufgetragen wird, die Polyurethan oder Fluorthermoplast umfasst.

8. Klebstoff nach Anspruch 1, worin der halogenfreie flammenhemmende Zusatzstoff einen Phosphatester umfasst.

9. Verfahren zur Herstellung eines Klebstoffs, umfassend:
Bereitstellen eines (Meth)acrylat-basierten Blockcopolymers;
Bereitstellen eines halogenfreien Flammenhemmstoffs; und
Mischen des (Meth)acrylat-basierten Blockcopolymers und des halogenfreien Flammenhemmstoffs, um einen druckempfindlichen Klebstoff zu bilden, worin der halogenfreie Flammenhemmstoff mindestens 10 Gew.-% des Klebstoffs umfasst, und wahlweise Bereitstellen und Mischen mindestens eines weiteren Zusatzstoffs, umfassend ein klebrigmachendes Harz, ein Antioxidationsmittel, ein anorganisches Füllmittel, ein UV-Stabilisierungsmittel, einen Weichmacher, ein Enthärtungsmittel oder eine Kombination davon, zu dem Klebstoff.

## Revendications

1. Adhésif constitué de :
un copolymère séquencé à base de (méth)acrylate ; et
au moins 10 % en poids d'un agent ignifugeant sans halogène, où l'adhésif est un adhésif sensible à la pression ignifugeant.

2. Adhésif constitué de :
un copolymère séquencé à base de (méth)acrylate ; et
au moins 10 % en poids d'un agent ignifugeant sans halogène, où l'adhésif est un adhésif sensible à la pression ignifugeant, et
au moins un additif sans halogène comprenant une résine conférant de l'adhésivité, un antioxydant, une charge inorganique, un agent stabilisant aux UV, un plastifiant, un agent de ramollissement, ou une combinaison de ceux-ci.

3. Adhésif selon la revendication 1, dans lequel le copolymère séquencé à base de (méth)acrylate comprend un copolymère di-séquencé, tri-séquencé ou séquencé en étoile de (méth)acrylate.

4. Adhésif selon la revendication 1, dans lequel le copolymère séquencé à base de (méth)acrylate comprend un copolymère tri-séquencé comprenant :
au moins deux motifs polymères de bloc terminal A qui sont chacun dérivés d'un premier monomère comportant une insaturation monoéthylénique comprenant un (méth)acrylate, dans lequel chaque bloc terminal A a une température de transition vitreuse d'au moins 50 °C, telle qu'on peut la déterminer à l'aide d'une calorimétrie différentielle à balayage ou d'une analyse mécanique dynamique ; et
au moins un motif polymère de bloc intermédiaire B qui est dérivé d'un deuxième monomère comportant une insaturation monoéthylénique comprenant un (méth)acrylate ou un ester de vinyle, dans lequel chaque bloc intermédiaire B a une température de transition vitreuse n'excédant pas 20 °C, telle qu'on peut la déterminer à l'aide d'une calorimétrie différentielle à balayage ou d'une analyse mécanique dynamique ; et dans lequel au moins l'un parmi le premier monomère comportant une insaturation monoéthylénique ou le deuxième monomère comportant une insaturation monoéthylénique comprend un monomère de (méth)acrylate.

5. Adhésif selon la revendication 4, dans lequel le copolymère tri-séquencé à base de (méth)acrylate comprend un copolymère de (méthacrylate de polyméthyle)-(acrylate de polyalkyle)-(méthacrylate de polyméthyle).

6. Adhésif selon la revendication 1, dans lequel l'adhésif sensible à la pression ignifugeant est optiquement transparent, ayant un % de transmission d'au moins 90 %, un trouble inférieur à 10 % et un facteur de jaunissement, b*, dans la plage d'environ 0,16 à 2,0, tels qu'on peut les déterminer selon l'ASTM 1003.

7. Adhésif selon la revendication 1, dans lequel l'adhésif sensible à la pression ignifugeant passe le test de combustion verticale FAR 25.853a lorsqu'il est revêtu sur un support comprenant du polyuréthane ou un thermoplastique fluoré.

8. Adhésif selon la revendication 1, dans lequel l'additif ignifugeant sans halogène comprend un ester de phosphate.

9. Procédé de préparation d'un adhésif comprenant :
la fourniture d'un copolymère séquencé à base de (méth)acrylate ;
la fourniture d'un agent ignifugeant sans halogène ; et
le mélange du copolymère séquencé à base de (méth)acrylate et de l'agent ignifugeant sans halogène pour former un adhésif sensible à la pression, dans lequel l'agent ignifugeant sans halogène comprend au moins 10 % en poids d'adhésif, et éventuellement la fourniture et le mélange d'au moins un additif supplémentaire comprenant une résine conférant de l'adhésivité, un antioxydant, une charge inorganique, un agent stabilisant aux UV, un plastifiant, un agent de ramollissement, ou une combinaison de ceux-ci, à l'adhésif.
